(19) Europäisches Patentamt
European Patent Office
Office européen des brevets

(11) Veröffentlichungsnummer: **0 143 078**
**B1**

(12) # EUROPÄISCHE PATENTSCHRIFT

(45) Veröffentlichungstag der Patentschrift: **18.01.89**

(51) Int. Cl.⁴: **C 07 F 9/38**, C 07 F 9/40, C 07 F 9/32, C 07 F 9/30, C 07 F 9/53, A 01 N 25/32

(21) Anmeldenummer: **84810545.8**

(22) Anmeldetag: **09.11.84**

(54) **Neue Phosphorverbindungen als Wirkstoffe zum Schützen von Kulturpflanzen vor der phytotoxischen Wirkung von Herbiziden.**

(30) Priorität: **15.11.83 CH 6135/83**
**06.06.84 CH 2748/84**

(43) Veröffentlichungstag der Anmeldung:
**29.05.85 Patentblatt 85/22**

(45) Bekanntmachung des Hinweises auf die Patenterteilung:
**18.01.89 Patentblatt 89/3**

(84) Benannte Vertragsstaaten:
**AT BE CH DE FR GB IT LI NL**

(56) Entgegenhaltungen:
**US-A-4 036 628**
**US-A-4 319 912**

**G. Pulvermacher: "Zur Kenntnis des Formaldeyds", Chem. Ber. 26 (1893), S. 2360-2363**
**CHEMICAL ABSTRACTS, Band 70, Nr. 7, Februar 17, 1969, Seite 333, Zusammenfassung 29007p, COLUMBUS, OHIO, (US); V.ABRAMOV et al.: "Reaction of phenylhydrazides of dialkyl phosphites with carbonyl compounds"**
**CHEMICAL ABSTRACTS, Band 85, Nr. 15, Oktober 11, 1976, Seite 470, Zusammenfassung 108708f, COLUMBUS, OHIO, (US); J. RACHON et al.: "Aminophosphonic acids. Part V. Syntheses of alpha-aminophosphonic and**

(73) Patentinhaber: **CIBA-GEIGY AG, Klybeckstrasse 141, CH-4002 Basel (CH)**

(72) Erfinder: **Diel, Peter Joseph, Dr., Kornfeldstrasse 73, CH-4125 Riehen (CH)**
Erfinder: **Maier, Ludwig, Dr., Im Lee 28, CH-4144 Arlesheim (CH)**

(56) Entgegenhaltungen: (Fortsetzung)
**alphahydrazinophosphonic acids from aliphatic aldazines".**
**CHEMICAL ABSTRACTS, Band 90, Nr. 11, März 12, 1979, Seite 644, Zusammenfassung 87663y, COLUMBUS, OHIO, (US)**

EP 0 143 078 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue acylierte Hydrazinomethylphosphonate, -phosphinate und -phosphinoxide, welche Kulturpflanzen vor der phytotoxischen Wirkung von Herbiziden vor allem von Chloracetanilid-Herbiziden zu schützen vermögen, als Herbizid-antagonistischen Wirkstoff, ein Mittel welches acyliertes Hydrazinomethylphosphonat, -phosphinat oder -phosphinoxid enthält, ferner Mittel welche neben diesem antagonisierenden Wirkstoff, auch Antidote oder Gegenmittel genannt, bereits das Herbizid enthalten und ein Verfahren zur selektiven Unkrautbekämpfung mittels eines Herbizides und diesem Gegenmittel. Die Erfindung umfasst auch die Herstellung der neuen acylierten Hydrazinomethylphosphonate, -phosphinate und -phosphinoxide.

Es ist bekannt, dass Herbizide aus den verschiedensten Stoffklassen, wie Triazine, Harnstoffderivate, Carbamate, Thiolcarbamate, Halogenacetanilide, Halogenphenoxyessigsäuren usw. bei der Anwendung in wirksamer Dosis gelegentlich neben den zu bekämpfenden Unkräutern auch die Kulturpflanzen in gewissem Masse schädigen. Überdosen werden oft ungewollt und zufälligerweise appliziert, wenn sich Randzonen beim streifenweisen Spritzen überdecken, sei es durch Windeinwirkung oder durch falsches Einschätzen der Breitenwirkung des Spritzgerätes. Es können klimatische Verhältnisse oder eine Bodenbeschaffenheit vorliegen, so dass die für normale Bedingungen empfohlene Herbizidmenge als Überdosis wirkt. Die Qualität des Saatgutes kann bei der Herbizidverträglichkeit auch eine Rolle spielen. Um diesem Problem zu begegnen, sind schon verschiedene Stoffe vorgeschlagen worden, welche befähigt sind, die schädigende Wirkung des Herbizids auf die Kulturpflanze spezifisch zu antagonisieren, d.h. die Kulturpflanze zu schützen, ohne dabei die Herbizidwirkung auf die zu bekämpfenden Unkräuter merklich zu beeinflussen. Dabei hat es sich gezeigt, dass die vorgeschlagenen Gegenmittel sowohl bezüglich der Kulturpflanzen als auch bezüglich des Herbizids und gegebenenfalls auch in Abhängigkeit von der Applikationsart oft sehr artspezifisch wirken, d.h. ein bestimmtes Gegenmittel eignet sich oft nur für eine bestimmte Kulturpflanze und einige wenige herbizide Stoffklassen.

Die direkte pre- oder postemergente Behandlung gewisser Nutzpflanzen mit Gegenmitteln als Antagonisten bestimmter Herbizidklassen auf einer Anbaufläche ist in den Deutschen Offenlegungsschriften 2 141 586 und 2 218 097, sowie im US-Patent 3 867 444 beschrieben.

Ferner können Maispflanzen gemäss der Deutschen Offenlegungsschrift 2 402 983 wirksam vor Schädigung durch Chloracetanilide geschützt werden, indem man dem Boden als Gegenmittel ein N-disubstituiertes Dichloracetamid zuführt.

Die vorliegenden Verbindungen vermögen Kulturpflanzen wie Getreide, Mais, Reis, Hirse oder Soja gegen die phytotoxische Wirkung von Herbiziden verschiedener chemischen Klassen zu schützen.

Die neuen acylierten Hydrazinomethylphosphonsäuren, -phosphonate, -phosphinsäuren, -phosphinate und -phosphinoxide entsprechen der Formel I

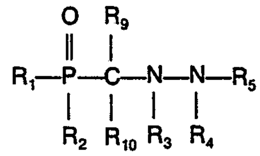

(1) ,

worin

$R_1$ und $R_2$ unabhängig voneinander je Hydroxy $C_1$–$C_4$-Alkyl, Aryl, $C_1$–$C_4$-Alkoxy, $C_2$–$C_4$-Alkenyloxy, $C_2$–$C_4$-Alkinyloxy, $C_2$–$C_4$-Halogenalkoxy mit 1 bis 5 Halogenatomen, $C_2$–$C_8$-Alkoxyalkoxy, $C_1$–$C_4$-Cyanoalkoxy, $C_1$–$C_4$-Phenylalkyl oder Aralkoxy, welches unsubstituiert oder im Phenylkern durch Halogen, Cyan, Nitro oder $C_1$–$C_4$-Alkyl substituiert ist,

$R_3$ einen Halogenalkanoylrest $-COCX_1X_2-R_6$ oder einen durch 1 bis 3 Halogenatome substituierten Alkenoylrest mit 2 bis 4 Kohlenstoffatomen im Alkenylteil;

$R_4$ Wasserstoff, dasselbe wie $R_3$, einen Rest $-COOR_7$ oder $COR_8$ oder einen $C_1$–$C_4$-Alkyl-, $C_2$–$C_4$-Alkenyl- oder einen $C_1$–$C_4$-Phenylalkylrest, welcher im Phenylrest gegebenenfalls durch Halogen, Cyan, Nitro oder $C_1$–$C_4$-Alkoxy substituiert ist,

$R_5$ Wasserstoff oder einen $C_1$–$C_4$-Alkyl-, $C_2$–$C_4$-Alkenyl- oder $C_2$–$C_4$-Alkinylrest, ist,

$R_6$ Wasserstoff, Halogen oder einen $C_1$–$C_6$-Alkylrest,

$R_7$ einen $C_1$–$C_4$-Alkyl- oder $C_1$–$C_4$-Phenylalkylrest, welcher im Phenylring gegebenenfalls durch Halogen, Cyan, Nitro oder $C_1$–$C_4$-Alkoxy substituiert ist,

$R_8$ einen $C_1$–$C_4$-Alkyl-, $C_2$–$C_4$-Alkenyl, $C_2$–$C_4$-Alkinyl-, Phenyl- oder $C_1$–$C_4$-Phenylalkylrest, welcher gegebenenfalls durch Halogen, Cyan, Nitro oder $C_1$–$C_4$-Alkoxy substituiert ist,

$R_9$ Wasserstoff, $C_1$–$C_4$-Alkyl oder Phenyl, welches gegebenenfalls durch Halogen, Cyan, Nitro oder $C_1$–$C_4$-Alkoxy substituiert ist,

$R_{10}$ Wasserstoff oder $C_1$–$C_4$-Alkyl und

$X_1$ und $X_2$ je Halogen oder eines davon auch Wasserstoff bedeuten.

In den Alkylgruppen und den Resten welche Alkylteile enthalten kann Alkyl durch Methyl, Ethyl, n- und iso-Propyl, sowie n-, iso-, sec- und tert.-Butylreste vertreten sein. Alkenylreste sind beispielsweise Vinyl-, Allyl-, Methallyl-, Butenyl- und Butadienyl-, Alkinylreste sind z.B. der Ethinyl-, die Propinyl und Butinylreste.

Aralkylreste umfassen über $C_1$–$C_4$-Alkyl gebundene Phenyl- und Naphthylreste, bevorzugt ist der Phenylethyl und vor allem der Benzylrest.

Unter Halogen kommen Fluor, Chlor, Brom und Iod in Frage, bevorzugt ist Chlor.

Durch ihre Wirkung aufgefallen sind diejenigen Verbindungen der Formel I in denen

$R_1$ und $R_2$ je $C_1$–$C_4$ Alkoxy bedeuten (Phosphonate)

$R_1$ $C_1$–$C_4$-Alkoxy und $R_2$ $C_1$–$C_4$ Alkyl bedeuten (Phosphinate)

$R_1$ und $R_2$ je $C_1$–$C_4$ Alkyl bedeuten (Phosphinoxide) ferner diejenigen Verbindungen, in denen $R_1$ und $R_2$ je einen $C_1$–$C_4$ Alkyl- oder $C_1$–$C_4$ Alkoxyrest,

$R_3$ den Chloracetyl-, Dichloracetyl- oder 2,3,3-Trichloracrylsäurerest,

$R_4$ Wasserstoff, dasselbe wie $R_3$, einen $C_1$–$C_4$ Alkyl-, $C_2$–$C_4$-Alkenyl-, Aralkyl-, $C_1$–$C_4$ Alkylcarbonyl-, $C_1$–$C_4$ Alkoxycarbonyl-, Benzoyl- oder Benzyloxycarbonylrest und

$R_5$ Wasserstoff bedeuten, ferner die Einzelverbindungen:

Hydrazino-N-benzyloxycarbonyl-N′-chloracetyl-N′-methyl-O,O-diäthylphosphonat,
Hydrazino-N-benzyloxycarbonyl-N′-dichloracetyl-N′-methyl-O,O-diäthylphosphonat,
Hydrazino-N-benzyloxycarbonyl-N′-dichloracetyl-N′-methyl-O,O-di-isopropyl-phosphonat,
Hydrazino-N-methoxycarbonyl-N′-chloracetyl-N′-methyl-O,O-diäthylphosphonat,
Hydrazino-N-methoxycarbonyl-N′-dichloracetyl-N′-methyl-O,O-diäthylphosphonat,
Hydrazino-N-t.butyloxycarbonyl-N′-chloracetyl-N′-methyl-O,O-diäthylphosphonat,
Hydrazino-N-t.butyloxycarbonyl-N′-dichloracetyl-N′-methyl-O,O-diäthylphosphonat,
Hydrazino-N′-chloracetyl-N′-methyl-O,O-diäthylphosphonat,
Hydrazino-N-benzyloxycarbonyl-N′-dichloracetyl-N′-methyl-O-isopropyl-methylphosphinat,
Hydrazino-N-benzyloxycarbonyl-N′-dichloracetyl-N′-methyl-O-äthylmethylphosphinat und
Hydrazino-N-benzyloxycarbonyl-N′-dichloracetyl-N′-methyl-O-äthyläthylphosphinat.

Die Herstellung der neuen acylierten Hydrazinomethylphosphonate-, phosphinate- oder phosphinoxide der Formel I geschieht in an sich bekannter Weise.

So sind Verfahren zur Herstellung von Hydrazinomethylphosphonsäuren bekannt geworden (J. Rachon et al.; Rocz. Chem. II, (1976) 477–487 und Chem. Abstr.; 90 (1979) : 87563y) in denen das durch Addition von Dialkylphosphiten an Aldazine erhältliche Addukt durch saure Hydrolyse zur Hydrazinomethylphosphonsäure gespalten wird.

Weiterhin ist bekannt (V.S. Abramov et al.; J. Gen. Chem. USSR; 38 (1968), 2267, zitiert nach Chem. Abstr.; 70 (1969) 29007 p) N′-Phenylhydrazinophosphonigsäureester mit Aldehyden und Ketonen zu den entsprechenden N′-Phenylhydrazinomethylphosphonigsäureestern umzusetzen.

Die erfindungsgemässen Syntheseschritte können z.B. durch folgende Gleichungen dargestellt werden:

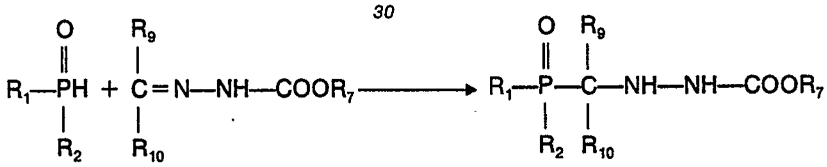

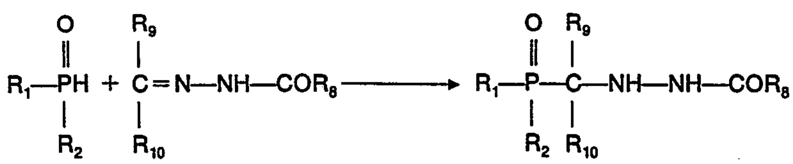

Das Derivat der betreffenden phosphorigen, phosphonigen oder phosphinigen Säure wird mit einem durch einen Kohlensäurerest geschützten Alkylidenhydrazin kondensiert. Man kommt so zu einem acylierten Hydrazinomethyl-phosphonat, -phosphinat oder -phosphinoxid.

Falls $R_1$ und $R_2$ Alkylreste bedeuten, kommt man zum acylierten Hydrazinomethyl-phosphinoxid auch wie folgt:

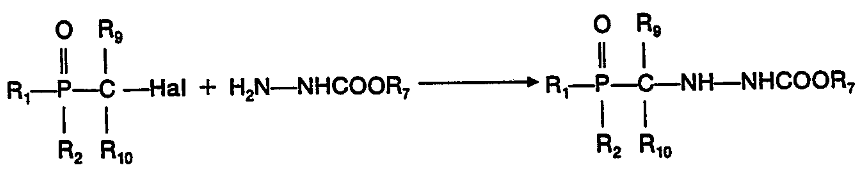

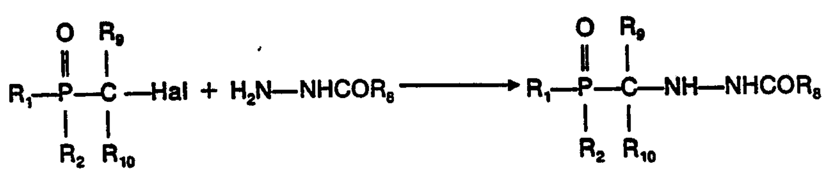

Das Halogenmethyl-phosphinoxid wird mit einem Carbazat kondensiert.

Diese Kondensationen werden in einem inerten organischen Lösungsmittel vorgenommen.

Die Schutzgruppe $-COOR_7$ kann gewünschtenfalls abgespalten werden

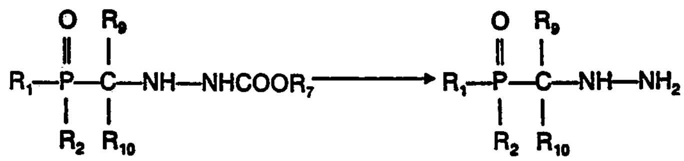

Dies geschieht durch einfache Hydrolyse in alkalischem oder saurem Milieu oder auch durch Hydrogenolyse im sauren Medium mittels Wasserstoff und einem Katalysator wie z. B. Palladium auf Aktivkohle wenn $R_7$ Benzyl ist.

Die obigen Hydrazinomethyl-phosphonyl-, phosphinyl- und oxophosphino-Derivate können nun mit einem oder 2 Moläquivalent-Halogenalkanoylhalogenid resp. Halogenalkenoylhalogenid acyliert werden.

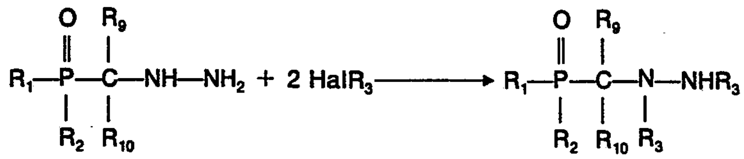


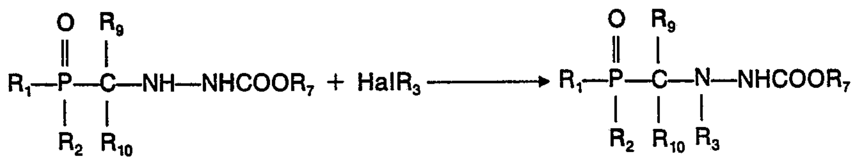


Diese Umsetzungen finden bei tiefen Temperaturen zwischen −20 °C und +50 °C in organischen inerten Lösungsmitteln in Gegenwart der mindestens äquimolaren Menge eines säurebindenden Mittels statt.

Wenn $R_4$ oder $R_5$ ein Alkyl, Alkenyl, Alkinyl oder Aralkylrest ist, so kann man diesen herstellen, indem man acylierte Hydrazinomethylphosphonate-, phosphinate oder -phosphinoxide der untenstehenden Formel mit $X–R_8$ alkyliert

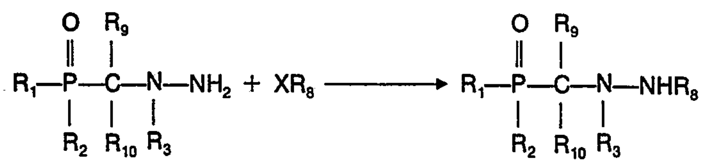


Auch diese Reaktionen werden in einem inerten organischen Lösungsmittel in Anwesenheit der mindestens äquimolaren Menge eines säurebindenden Mittels vorgenommen.

In den obigen Gleichungen haben $R_1$, $R_2$, $R_3$, $R_5$, $R_6$, $R_9$ und $R_{10}$ die unter Formel I gegebene Bedeutung, Hal steht für Halogen besonders für Chlor oder Brom. Das erfindungsgemässe Verfahren zur Herstellung der Verbindung der Formel I ist dadurch gekennzeichnet, dass man ein Hydrazinomethylphosphonat-, phosphinat oder phosphinoxid der Formel II

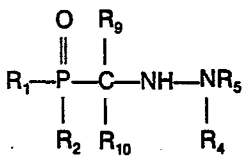 (II)

worin $R_1$, $R_2$, $R_4$, $R_5$, $R_9$ und $R_{10}$ die unter Formel I gegebene Bedeutung haben, in einem inerten organischen Lösungsmittel, in Gegenwart der mindestens äquimolaren Menge eines säurebindenden Mittels, mit einem Acylhalogenid der Formel III umsetzt

$$R_3\text{–Hal} \qquad \text{(III)},$$

worin $R_3$ die unter Formel I gegebene Bedeutung hat und Hal Chlor oder Brom bedeutet.

Die Erfindung betrifft ausserdem die neuen Zwischenprodukte der Formel II, worin die Substituenten $R_1$, $R_2$, $R_4$, $R_5$, $R_9$ und $R_{10}$ wie in Formel I definiert sind, mit der Massgabe, dass die Substituenten $R_1$ und $R_2$ nicht für Hydroxy und $R_4$ und $R_5$ nicht für Wasserstoff stehen, wenn $R_{10}$ für Wasserstoff und $R_9$ für $C_1$–$C_4$-Alkyl oder gegebenenfalls substituiertes Phenyl steht.

Weiterhin betrifft die Erfindung ein Verfahren zur Herstellung von Verbindungen der Formel II

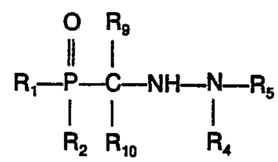 (II)

in der $R_4$ für einen Halogenalkanoylrest $-COX_1X_2-R_6$ oder einen durch 1 bis 3 Halogenatome substituierten Alkenoylrest mit 2 bis 4 Kohlenstoffatomen im Alkenylteil, einen Rest $-COOR_7$ oder $COR_8$ steht und die Reste $R_1$, $R_2$, $R_5$, $R_6$, $R_7$, $R_8$, $R_9$, $R_{10}$, $X_1$ und $X_2$ die unter Formel I gegebene Bedeutung haben, dadurch gekennzeichnet, dass man eine Verbindung der Formel IV

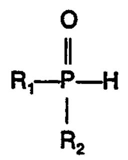

(IV)

mit einer Verbindung der Formel V

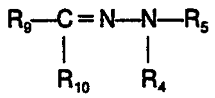

(V)

umsetzt, wobei die Reste $R_1$, $R_2$, $R_4$, $R_5$, $R_9$ und $R_{10}$ wie zuvor definiert sind.

Als inerte organische Lösungsmittel kommen bei diesen Umsetzungen vor allem halogenierte Kohlenwasserstoffe wie Chloroform, Methylenchlorid, Äthylenchlorid aber auch Aromaten, wie Benzol, Toluol oder Xylol in Frage. Ferner können Äther wie Diäthyläther, Dioxan oder Tetrahydrofuran, höhersiedende Kohlenwasserstoffe, wie z.B. Cyclohexan oder z.B. auch Dimethylformamid, sowie Gemische derselben in Frage.

Die Reaktionstemperaturen sind zwischen −20 °C und dem Siedepunkt des Lösungsmittels, wobei bei exothermen Kondensationen am Anfang solange Halogenwasserstoff freigesetzt wird, mit Vorteil gekühlt wird und am Ende der Umsetzungen nachdem alles zugegeben ist noch unter Erwärmen nachgerührt wird.

Ein solches Gegenmittel oder Antidote der Formel I kann je nach Anwendungszweck zur Vorbehandlung des Saatgutes der Kulturpflanze (Beizung des Samens oder der Stecklinge) eingesetzt oder vor oder nach der Saat in den Boden gegeben werden. Es kann aber auch für sich allein oder zusammen mit dem Herbizid vor oder nach dem Auflaufen der Pflanzen appliziert werden. Die Behandlung der Pflanze oder des Saatgutes mit dem Antidote kann daher grundsätzlich unabhängig vom Zeitpunkt der Applikation der phytotoxischen Chemikalie erfolgen. Die Behandlung der Pflanze kann jedoch auch durch gleichzeitige Applikation von phytotoxischer Chemikalie und Gegenmittel (Tankmischung) erfolgen. Die premergente Behandlung schliesst sowohl die Behandlung der Anbaufläche vor der Aussaat (ppi = pre plant incorporation) als auch die Behandlung der angesäten, aber noch nicht bewachsenen Anbauflächen ein.

Die Aufwandmengen des Gegenmittels im Verhältnis zum Herbizid richten sich weitgehend nach der Anwendungsart. Bei einer Feldbehandlung, bei der Herbizid und Gegenmittel entweder gleichzeitig (Tankmischung) oder separat appliziert werden, liegt das Verhältnis der Mengen von Gegenmittel zu Herbizid im Bereich von 1:100 bis 5:1. In der Regel wird bei einem Mengenverhältnis von Gegenmittel zu Herbizid von 1:5 bis 1:50 die volle Schutzwirkung erreicht. Bei der Samenbeizung und ähnlichen gezielten Schutzmassnahmen werden jedoch weit geringere Mengen Gegenmittel im Vergleich mit den später pro Hektar Anbaufläche verwendeten Mengen an Herbizid benötigt. Im allgemeinen werden bei der Samenbeizung pro kg Samen 0,1–10 g Gegenmittel benötigt. In der Regel wird mit 0,1–2 g Gegenmittel pro kg Samen bereits die volle Schutzwirkung erreicht. Falls das Gegenmittel kurz vor der Aussaat durch Samenquellung appliziert werden soll, so werden zweckmässig Lösungen des Gegenmittels, welche den Wirkstoff in einer Konzentration von 1–10 000 ppm enthalten. In der Regel wird mit Konzentrationen des Gegenmittels von 100–1000 ppm die volle Schutzwirkung erreicht.

In der Regel liegt zwischen protektiven Massnahmen, wie Samenbeizung und Behandlung von Stecklingen mit einem Gegenmittel der Formel I und der möglichen späteren Feldbehandlung mit Agrarchemikalien ein längerer Zeitraum. Vorbehandeltes Saat- und Pflanzengut kann später in der Landwirtschaft, im Gartenbau und in der Forstwirtschaft mit unterschiedlichen Chemikalien in Berührung kommen. Die Erfindung bezieht sich daher auch auf protektive Mittel für Kulturpflanzen, die als Wirkstoff ein Gegenmittel der Formel I zusammen mit üblichen Trägerstoffen enthalten. Solche Mittel können gegebenenfalls zusätzlich jene Agrarchemikalien enthalten, von deren Einfluss die Kulturpflanze geschützt werden soll.

Als Kulturpflanzen gelten im Rahmen vorliegender Erfindung alle Pflanzen, die in irgendeiner Form Ertragsstoffe, wie Samen, Wurzeln, Stengel, Knollen, Blätter, Blüten, ferner Inhaltsstoffe, wie Öle, Zucker, Stärke, Eiweiss usw., produzieren und zu diesem Zweck angebaut werden. Zu diesen Pflanzen gehören beispielsweise sämtliche Getreidearten, wie Weizen, Roggen, Gerste und Hafer, daneben vor allem Reis, Kulturhirse, Mais, Baumwolle, Zuckerrüben, Zuckerrohr, Soja, Bohnen und Erbsen.

Das Gegenmittel kann überall dort eingesetzt werden, wo eine Kulturpflanze der vorgenannten Art vor der schädlichen Wirkung einer Agrarchemikalie geschützt werden soll. Dabei kommen als Agrarchemikalien, wie bereits ausgeführt, in erster Linie Herbizide der verschiedensten Stoffklassen, insbesondere jedoch Halogenacetanilide und Thiolcarbamate in Betracht.

Halogenacetanilide, deren schädigende Wirkung gegenüber Kulturpflanzen mit Hilfe der neuen acylierten Hydrazinomethylphosphonate, -phosphinate und -phosphinoxide der Formel I aufgehoben werden kann, sind bereits in grosser Zahl bekannt geworden (vgl. z.B. DE-A 2 305 495, 2 328 340, 2 212 268, 2 726 253 und 2 805 757, sowie US Patentschriften 3 946 044, 4 022 608 und 4 039 314). Solche Halogenacetanilide können durch die folgende allgemeine Formel VII beschrieben werden:

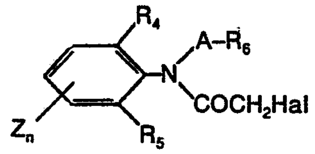

(VII)

In dieser Formel bedeuten Hal Halogen, insbesondere Chlor oder Brom, $R_4$ und $R_5$ unabhängig voneinander je Wasserstoff, Halogen, niederes Alkyl, Alkoxy, Alkylthio, Halogenalkyl, Alkoxyalkyl oder Alkylthioalkyl, Z Wasserstoff, Halogen, niederes Alkyl, Alkoxy, Alkylthio, Halogenalkyl, Alkoxyalkyl oder Alkylthioalkyl, wobei die vorgenannten Reste Z vorzugsweise in 3-Stellung in Bezug auf das Stickstoffatom stehen, n 0 bis 3, A Alkylen, insbesondere Methylen, 1,1- und 1,2-Äthylen, wobei 1,2-Äthylen durch 1–2 niedere Alkylgruppen substituiert sein kann, und $R_6$ niederes Alkoxy, Hydroxycarbonyl, Alkoxycarbonyl, Carbamoyl, N-Alkylcarbamoyl, N,N-Dialkylcarbamoyl, Cyano, ein gegebenenfalls substituierter stickstoffhaltiger heterocyclischer Rest, Alkanoyl, gegebenenfalls substituiertes Benzoyl, gegebenenfalls substituiertes 1,3,4-Oxadiazol-2-yl, 1,3,4-Thiadiazol-2-yl, 1,3,4-Triazol-3-yl oder 1,3,4-Triazol-1-yl bedeutet.

Als einzelne Vertreter solcher Halogenacetanilide seien beispielsweise die folgenden genannt:

N-Äthoxymethyl-N-chloracetyl-2-äthyl-6-methylanilin
N-Chloracetyl-N-methoxymethyl-2,6-diäthylanilin
N-Chloracetyl-N-(2-methoxyäthyl)-2,6-dimethylanilin
N-(2-Allyloxyäthyl)-N-chloracetyl-2,6-dimethylanilin
N-Chloracetyl-N-(2-n-propoxyäthyl)-2,6-dimethylanilin
N-Chloracetyl-N-(2-isopropoxyäthyl)-2,6-dimethylanilin
N-Chloracetyl-N-(2-methoxyäthyl)-2-äthyl-6-methylanilin
N-Chloracetyl-N-(methoxyäthyl)-2,6-diäthylanilin
N-(2-Äthoxyäthyl)-N-chloracetyl-2-äthyl-6-methylanilin
N-Chloracetyl-N-(2-methoxy-1-methyläthyl)-2-methylanilin
N-Chloracetyl-N-(2-methoxy-1-methyläthyl)-2,6-dimethylanilin
N-Chloracetyl-N-(2-methoxy-1-methyläthyl)-2,6-diäthylanilin
N-Chloracetyl-N-(2-methoxy-1-methyläthyl)-2-äthyl-6-methylanilin
N-(2-Äthoxyäthyl)-N-chloracetyl-2,6-diäthylanilin
N-Chloracetyl-N-(2-n-propoxyäthyl)-2-äthyl-6-methylanilin
N-Chloracetyl-N-(2-n-propoxyäthyl)-2,6-diäthylanilin
N-Chloracetyl-N-(2-isopropoxyäthyl)-2-äthyl-6-methylanilin
N-Äthoxycarbonylmethyl-N-chloracetyl-2,6-dimethylanilin
N-Äthoxycarbonylmethyl-N-chloracetyl-2,6-diäthylanilin
N-Chloracetyl-N-methoxycarbonylmethyl-2,6-dimethylanilin
N-Chloracetyl-N-(2,2-diäthoxyäthyl)-2,6-dimethylanilin
N-Chloracetyl-N-(2-methoxy-1-methyläthyl)-2,3-dimethylanilin
N-(2-Äthoxyäthyl)-N-chloracetyl-2-methylanilin
N-Chloracetyl-N-(2-methoxyäthyl)-2-methylanilin
N-Chloracetyl-N-(2-methoxy-2-methyläthyl)-2,6-dimethylanilin
N-(2-Äthoxy-2-methyläthyl)-N-chloracetyl-2-äthyl-6-methylanilin
N-Chloracetyl-N-(1-äthyl-2-methoxyäthyl)-2,6-dimethylanilin
N-Chloracetyl-N-(2-methoxyäthyl)-2-methoxy-6-methylanilin
N-n-Butoxymethyl-N-chloracetyl-2-tert.-butylanilin
N-(2-Äthoxyäthyl-1-methyläthyl)-2,6-dimethylanilin
N-Chloracetyl-N-(-2-methoxyäthyl)-2-chlor-6-methylanilin
N-(2-Äthoxyäthyl)-N-chloracetyl-2-chlor-6-methylanilin
N-(2-Äthoxyäthyl)-N-chloracetyl-2,3,6-trimethylanilin
N-Chloracetyl-1-(2-methoxyäthyl)-2,3,6-trimethylanilin
N-Chloracetyl-N-cyanomethyl-2,6-dimethylanilin
N-But-3-in-1-yl-N-chloracetylanilin
N-Chloracetyl-N-propargyl-2-äthyl-6-methylanilin
N-Chloracetyl-N-(1,3-dioxolan-2-ylmethyl)-2,6-dimethylanilin
N-Chloracetyl-N-(1,3-dioxolan-2-ylmethyl)-2-äthyl-6-methylanilin
N-Chloracetyl-N-(1,3-dioxan-2-ylmethyl)-2-äthyl-6-methylanilin
N-Chloracetyl-N-(2-furanylmethyl)-2,6-dimethylanilin
N-Chloracetyl-N-(2-furanylmethyl)-2-äthyl-6-methylanilin
N-Chloracetyl-N-(2-tetrahydrofuranylmethyl)-2,6-dimethylanilin
N-Chloracetyl-N-(N-propargylcarbamoylmethyl)-2,6-dimethylanilin
N-Chloracetyl-N-(N,N-dimethylcarbamoylmethyl)-2,6-dimethylanilin
N-(n-Butoxymethyl)-N-chloracetyl-2,6-diäthylanilin
N-(2-n-Butoxyäthyl)-N-chloracetyl-2,6-diäthylanilin
N-Chloracetyl-N-(2-methoxy-1,2-dimethyläthyl)-2,6-dimethylanilin
N-Chloracetyl-N-isopropyl-2,3-dimethylanilin
N-Chloracetyl-N-isopropyl-2-chloranilin
N-Chloracetyl-N-(1H-pyrazol-1-ylmethyl)-2,6-dimethylanilin
N-Chloracetyl-N-(1H-pyrazol-1-ylmethyl)-2-äthyl-6-methylanilin
N-Chloracetyl-N-(1H-1,2,4-triazol-1-ylmethyl)-2,6-dimethylanilin
N-Chloracetyl-N-(1H-1,2,4-triazol-1-ylmethyl)-2,6-diäthylanilin
N-Benzoylmethyl-N-chloracetyl-2,6-dimethylanilin
N-Benzoylmethyl-N-chloracetyl-2-äthyl-6-methylanilin

N-Chloracetyl-N-(5-methyl-1,3,4-oxadiazol-2-yl)-2,6-diäthylanilin
N-Chloracetyl-N-(5-methyl-1,3,4-oxadiazol-2-yl)-2-äthyl-6-methylanilin
N-Chloracetyl-N-(5-methyl-1,3,4-oxadiazol-2-yl)-2-tert.butylanilin
N-Chloracetyl-N-(4-chlorbenzoylmethyl)-2,6-dimethylanilin
N-Chloracetyl-N-(1-methyl-5-methylthio-1,3,4-triazol-2-ylmethyl)-2,6-diäthylanilin.

Neben Chloracetaniliden kommen auch Herbizide anderer Stoffklassen in Betracht, wie beispielsweise Thiolcarbamate:
S-Äthyl-N,N-dipropylthiocarbamat,
S-Äthyl-N,N-diisobutylthiocarbamat,
S-2,3-Dichlorallyl-N,N-diisopropylthiolcarbamat,
S-Propyl-N-butyl-N-äthylthiolcarbamat,
S-2,3,3-Trichlorallyl-N,N-diisopropylthiocarbamat,
S-Propyl-N,N-dipropylthiolcarbamat,
S-Äthyl-N-äthyl-N-cyclohexylthiolcarbamat,
S-Äthyl-N-hexahydro-1H-azepin-1-carbothioat,
S-Isopropyl-N,N-hexamethylen-thiolcarbamat,
S-(p-Chlorbenzyl)-N,N-diäthylthiolcarbamat,
N-Äthylthiocarbonyl-cis-decahydrochinolin,
N-Propylthiocarbonyl-decahydrochinaldin,
S-Äthyl-N,N-bis(n-butyl)-thiolcarbamat,
S-tert.Butyl-N,N-bis(n-propyl)-thiolcarbamat.

Neben den Chloracetanilid- und Thiolcarbamaten kommen auch Herbizide anderer Stoffklassen in Betracht, wie beispielsweise

Triazine und Triazinone:
2,4-Bis(isopropylamino)-6-methylthio-1,3,5-triazin («Prometryn»),
2,4-bis(äthylamino)-6-methylthio-1,3,5-triazin («Simetryn»),
2-(1′,2′-Dimethylpropylamino)-4-äthylamino-6-methylthio-1,3,5-triazin («Dimethametryn»),
4-Amino-6-tert.butyl-4,5-dihydro-3-methylthio-1,2,4-triazin-5-on («Metribuzin»),
2-Chlor-4-äthylamino-6-isopropylamino-1,3,5-triazin («Atrazin»),
2-Chlor-4,6-bis-(äthylamino-1,3,5-triazin («Simazin»),
2-tert.Butylamino-4-chlor-6-äthylamino-1,3,5-triazin («Terbuthylazin»),
2-tert.Butylamino-4-äthylamino-6-methoxy-1,3,5-triazin («Terbumeton»),
2-tert.Butylamino-4-äthylamino-6-methylthio-1,3,5-triazin («Terbutryn»),
2-Äthylamino-4-isopropylamino-6-methylthio-1,3,5-triazin («Ametryn»);

Harnstoffe:
1-(Benzothiazol-2-yl)-1,3-dimethylharnstoff;
Phenylharnstoffe wie beispielsweise
3-(3-Chlor-p-tolyl)-1,1-dimethylharnstoff («Chlortoluron»),
1,1-Dimethyl-3-(ααα-trifluor-m-tolyl)-harnstoff («Fluometuron»),
3-(4-Brom-3-chlorphenyl)-1-methoxy-1-methylharnstoff («Chlorbromuron»),
3-(4-Bromphenyl)-1-methoxy-1-methylharnstoff («Metobromuron»),
3-(3,4-Dichlorphenyl)-1-methoxy-1-methylharnstoff («Linuron»),
3-(4-Chlorphenyl)-1-methoxy-1-methylharnstoff («Monolinuron»),
3-(3,4-Dichlorphenyl)-1,1-dimethylharnstoff («Diuron»),
3-(4-Chlorphenyl)-1,1-dimethylharnstoff («Monuron»),
3-(3-Chlor-4-methoxyphenyl)-1,1-dimethylharnstoff («Metoxuron»);
Sulfonylharnstoffe wie beispielsweise
N-(2-Chlorphenylsulfonyl)-N′-(4-methoxy-6-methyl-1,3,5-triazin-2-yl)-harnstoff,
N-(2-Methoxycarbonylphenylsulfonyl)-N′-(4,6-dimethylpyrimidin-2-yl)-harnstoff,
N-(2,5-Dichlorphenylsulfonyl)-N′-(4,6-dimethoxypyrimidin-2-yl)-harnstoff,
N-[2-(2-butenyloxy)-phenylsulfonyl]-N′-(4-methoxy-6-methyl-1,3,5-triazin-2-yl)-harnstoff
sowie die in den europäischen Patentpublikationen 44 808 und 44 809 genannten Sulfonylharnstoffe;

Chloracetamide:
N-[1-Isopropyl-2-methylpropen-1-yl-(1)]-N-(2′-methoxyäthyl)-chloracetamid.

Diphenyläther und Nitrodiphenyläther:
2,4-Dichlorphenyl-4′-nitrophenyläther («Nitrofen»),
2-Chlor-1-(3′-äthoxy-4′-nitrophenoxy)-4-trifluormethyl-benzol («Oxyfluorfen»),
2′,4′-Dichlorphenyl-3-methoxy-4-nitrophenyläther («Chlormethoxynil»),
2-[4′-(2″,4″-Dichlorphenoxy)-phenoxy)propionsäure-methylester,
N-(2′-Phenoxyäthyl)-2-[5′(2″-chlor-4″-trifluormethylphenoxy)-phenoxy]-propionsäureamid,
2-[2-Nitro-5-(2-chlor-4-trifluormethylphenoxy)-phenoxy]-propionsäure-2-methoxyäthylester;
2-Chlor-4-trifluormethylphenyl-3′-oxazolin-2′-yl-4′-nitrophenyläther;

Benzoesäurederivate:
Methyl-5-(2′,4′-dichlorphenoxy)-2-nitrobenzoat («Bifenox»),
5-(2′-Chlor-4′-trifluormethylphenoxy)-2-nitrobenzoesäure («Acifluorfen»),
2,6-Dichlorbenzonitril («Dichlobenil»).

Nitroaniline:
2,6-Dinitro-N,N-dipropyl-4-trifluormethylanilin («Trifluralin»),
N-(1′-Äthylpropyl)-2,6-dinitro-3,4-xylidin («Pendimethalin»).

Oxadiazolone:
5-tert.-Butyl-3-(2′,4′-dichlor-5′-isopropoxyphenyl)-1,3,4-oxadiazol-2-on («Oxadiazon»).

Phosphate:
S-2-Methylpiperidino-carbonylmethyl-O,O-dipropyl-phosphorodithioat («Piperophos»).

Pyrazole:
1,3-Dimethyl-4-(2',4'-dichlorbenzoyl)-5-(4'-tolylsulfonyloxy)-pyrazol.

Ferner
α-(Phenoxy-phenoxy)-propionsäurederivate
sowie
α-(Pyridyl-2-oxy-phenoxy)-propionsäurederivate.

Die angewendete Menge der Gegenmittel, sofern sie nicht auf die Samen gebeizt wird schwankt zwischen etwa 0,01 und etwa 5 Gewichtsteilen pro Gewichtsteil Herbizid. Man ermittelt von Fall zu Fall, d.h. je nach verwendetem Herbizid-Typ, welches Verhältnis in Bezug auf optimale Wirkung bei der speziellen Kulturpflanze das geeignetste ist.

Die Verbindungen der Formel I werden in unveränderter Form oder vorzugsweise zusammen mit den in der Formulierungstechnik üblichen Hilfsmitteln eingesetzt und werden daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen d.h. die den Wirkstoff der Formel I und gegebenenfalls einen festen oder flüssigen Zusatzstoff enthaltenden Mittel.

Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Di-octylphthalat, aliphatische Kohlenwasserstoffe wie Cyclohexan oder Paraffine, Alkohole und Glykole sowie deren Äther und Ester, wie Äthanol, Äthylenglykol, Äthylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonid oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen wie wasserlösliche synthetische oberflächenaktive Verbindungen sein.

Als Seifen sind z.B. die Alkali-, Erdalkali- oder gegebenenfalls substituierten Ammoniumsalze von höheren Fettsäuren ($C_{10}$–$C_{22}$), wie z.B. die Na- oder K-Salze der Öl- oder Stearinsäure, oder von natürlichen Fettsäuregemischen, die z.B. aus Kokosnuss- oder Talgöl gewonnen werden können. Ferner sind auch die Fettsäure-methyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches.

Hierher gehören auch die Salze der Schwefelsäureester und Sulfonsäuren von Fettalkohol-Äthylenoxyd-Addukten. Die sulfonierten Benzimidazolderivate enthalten vorzugsweise 2 Sulfonsäuregruppen und einen Fettsäurerest mit 8–22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Äthylenoxyd-Adduktes oder Phospholipide in Frage.

Als nichtionisches Tensid kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Äthylenglykoläthergruppen und 10 bis 1000 Propylenglykolräthergruppen enthaltenden Polyäthylenoxidaddukte an Polypropylenglykol, Äthylendiaminopolypropylenglykol und Alkylpolypropylenglykol mit 1 bis 10 Kohlenstoffatomen in der Alkylkette. Die genannten Verbindungen enthalten üblicherweise

pro Propylenglykol-Einheit 1 bis 5 Äthylenglykoleinheiten.

Als Beispiele nichtionischer Tenside seien Nonylphenolpolyäthoxyäthanole, Ricinusölpolyglycoläther, Polypropylen-Polyäthylenoxyaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Äthylsulfate vor, z.B. das Stearyltrimethylammoniumchlorid oder das Benzyldi(2-chloräthyl)äthylammoniumbromid.

Die in der Formulierungstechnik gebräuchlichen Tenside sind u.a. in folgenden Publikationen beschrieben:

«Mc Cutcheon's Detergents and Emulsifiers Annual» MC Publishing Corp., Ridgewood, New Jersey, 1979

J. and M. Ash, «Encyclopedia of Surfactants» Vol. I–III, Chemical Publishing Co., Inc. New York, 1980–81

H. Stache «Tensid Taschenbuch» 2. Auflage, C. Hanser Verlag, München und Wien 1981.

Die herbiziden Zubereitungen enthalten in der Regel 0,1 bis 95%, insbesondere 0,1 bis 80%, Wirkstoff der Formel I, 1 bis 99,9% eines festen oder flüssigen Zusatzstoffes und 0 bis 25%, insbesondere 0,1 bis 25% eines Tensides.

Insbesondere setzten sich bevorzugte Formulierungen folgendermassen zusamen: (% = Gewichtsprozent)

Emulgierbare Konzentrate
Aktiver Wirkstoff:
1 bis 20%, bevorzugt 5 bis 10%
oberflächenaktives Mittel:
5 bis 30%, vorzugsweise 10 bis 20%
flüssiges Trägermittel:
50 bis 94%, vorzugsweise 70 bis 85%

Stäube
Aktiver Wirkstoff:
0,1 bis 10%, vorzugsweise 0,1 bis 1%
festes Trägermittel:
99,9 bis 90%, vorzugsweise 99,9 bis 99%

Suspension-Konzentrate
Aktiver Wirkstoff:
5 bis 75%, vorzugsweise 10 bis 50%
Wasser:
94 bis 25%, vorzugsweise 90 bis 30%
oberflächenaktives Mittel:
1 bis 40%, vorzugsweise 2 bis 30%

Benetzbare Pulver
Aktiver Wirkstoff:
0,5 bis 90%, vorzugsweise 1 bis 80%
oberflächenaktives Mittel:
0,5 bis 20%, vorzugsweise 1 bis 15%
festes Trägermittel:
5 bis 95%, vorzugsweise 15 bis 90%

Granulat
Aktiver Wirkstoff:
0,5 bis 30%, vorzugsweise 3 bis 15%
festes Trägermittel:
99,5 bis 70%, vorzugsweise 97 bis 85%

Während als Handelsware eher konzentrierte Mittel bevorzugt werden, verwendet der Endverbraucher in der Regel verdünnte Mittel. Die Anwendungsformen können bis hinab zu 0,001% an Wirkstoff verdünnt werden. Die Aufwandmengen betragen in der Regel 0,01 bis 10 kg AS/ha, vorzugsweise 0,025 bis 5 kg AS/ha.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

In den folgenden Beispielen sind die Temperaturen in Celsiusgraden °C, die Drücke in Millibar mbar angegeben.

Beispiel 1:
Herstellung von Hydrazino-N-benzyloxycarbonyl-N'-methyldiäthylphosphonat (Zwischenprodukt)

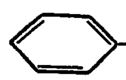$-CH_2O-CO-NHNH-CH_2PO(OC_2H_5)_2$

Man mischt bei Raumtemperatur 15 g N-Methylenbenzylcarbazat und 12,2 ml Diäthylphosphit und erwärmt unter Rühren auf 110°. Dann gibt man 1 ml Bortrifluorid-Ätherat dazu und rührt 1½ Stunden bei 110–115° weiter. Das Reaktionsgemisch wird dann abgekühlt und bei Raumtemperatur in Methylenchlorid aufgenommen. Nach dem Eindampfen des Lösungsmittels und Trocknen am Hochvakuum verbleiben 23,4 g eines orangebraunen Öls das beim Stehen kristallisiert. Schmelzpunkt 56–57°.

Analyse berechnet:
C 49,37% H 6,69% N 8,86% P 9,79%
gefunden:
C 48,6% H 6,6% N 9,0% P 9,8%

Anstelle von Bortrifluorid-Ätherat kann als Katalysator auch gasförmige Salzsäure, Zinnchlorid oder ein Alkalimetallalkoholat eingesetzt werden. Die Umsetzung gelingt auch ohne Katalysator, man muss jedoch bei höherer Temperatur arbeiten. Anstelle von Methylenchlorid können aromatische Lösungsmittel wie Benzol, Toluol oder Xylol verwendet werden.

Das als Ausgangsmaterial benutzte N-Methylenbenzylcarbazat wurde wie folgt hergestellt:

Man erwärmt ein Gemisch von 102,3 g Benzylcarbazat und 20,3 g Paraformaldehyd in 800 ml Methanol auf 50°. Dazu gibt man 11,06 ml Triäthylamin und rührt das Ganze während 2 Stunden unter Rückfluss. Dann wird das Lösungsmittel am Rotationsverdampfer entfernt. Die zurückbleibende zähe Masse wird in Methanol aufgelöst, mit Aktivkohle verrührt, filtriert und das Filtrat nochmals eingeengt. Der Rückstand wird bei 1 mbar Vakuum und 50 °C getrocknet. Man erhält so 105 g Titelprodukt als weisses Pulver mit Schmelzpunkt 87–91°, welches gemäss NMR-Spektrum als Monomer anfällt. Das Produkt enthält 0,03% Kristallwasser.

Analyse berechnet:
C 60,51% H 5,68% N 15,68%
gefunden:
C 60,5% H 5,8% N 15,6%

Man löst 20 g Benzylcarbazat-Hydrochlorid in 200 ml Wasser. Dann tropft man bei ca 15° unter Rühren 15 ml 37%ige Formalinlösung dazu. Nach 2 Stunden saugt man den entstandenen Niederschlag ab, verrührt ihn zweimal mit je 300 ml Wasser und saugt jedesmal erneut ab. Der Niederschlag wird dann in Methylenchlorid gelöst, über Natriumsulfat getrocknet, filtriert und schliesslich wird das Lösungsmittel abdestilliert. Nach dem Trocknen im Vakuum erhält man 15,9 g N-Methylenbenzylcarbazat welches bei 125–127° schmilzt und welches gemäss NMR-Spektrum als Trimer anfällt.

Analyse berechnet:
C 60,67% H 5,66% N 15,72%
gefunden:
C 60,2% H 5,5% N 15,8%

Auf analoge Weise wurden ebenfalls N-Methylencarbazoylmethylester, $CH_2=N-NHCOOCH_3$, N-Methylencarbazoyl-äthylester $CH_2=N-NHCOOC_2H_5$ und N-Methylen-carbazoyl-t.butylester $CH_2=N-NHCOO\ t.C_4H_9-$ erhalten.

Auf die im Beispiel 1 beschriebene Weise werden die folgenden N-Phosphormethyl-hydrazinoverbindungen erhalten:

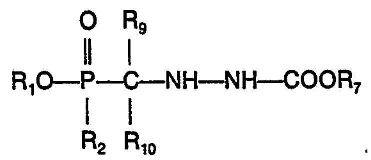

| $R_1$ | $R_2$ | $R_7$ | $R_9$ | $R_{10}$ | physikalische Daten |
|---|---|---|---|---|---|
| $iC_3H_7$ | $iC_3H_7O$ | benzyl | H | H | Kp. 195°/1,1 mbar |
| | | | | | Analyse |
| $C_2H_5$ | $CH_3$ | benzyl | H | H | ber. C 49,0% H 6,8% N 9,5% P 10,5% |
| | | | | | gef. C 49,2% H 6,8% N 9,5% P 10,3% |
| $C_2H_5$ | $C_2H_5$ | benzyl | H | H | ber. C 52,0% H 7,05% N 9,33% P 10,32% |
| | | | | | gef. C 51,5% H 7,1% N 9,3% P 10,1% |
| $iC_3H_7$ | $CH_3$ | benzyl | H | H | ber. C 52,0% H 7,05% N 9,33% P 10,32% |
| | | | | | gef. C 51,1% H 7,0% N 9,3% P 10,0% |
| $CH_3$ | $iC_4H_9O$ | benzyl | H | H | Smp. 58–60° |
| $iC_3H_7$ | $C_3H_7O$ | $CH_3$ | H | H | Kp. 138–140°/0,2 mbar |
| $C_2H_5$ | $C_2H_5O$ | $CH_3$ | H | H | Kp. 160–165°/0,2 mbar |
| $iC_4H_9$ | $CH_3$ | $CH_3$ | H | H | Kp. 170–173°/0,2 mbar |
| $CH_2$ | $iC_4H_9O$ | $C_2H_5$ | H | H | Kp. 173–175°/0,2 mbar |
| $iC_3H_7$ | $iC_3H_7O$ | $C_2H_5$ | H | H | Kp. 160°/0,06 mbar |
| $C_2H_5$ | $C_2H_5O$ | $C_2H_5$ | H | H | Kp. 170°/0,1 mbar |
| | | | | | Analyse |
| $C_2H_5$ | $C_2H_5O$ | $t.C_4H_9$ | H | H | ber. C 42,55% H 8,21% N 9,93% P 10,98% |
| | | | | | gef. C 42,9% H 8,6% N 10,4% P 10,6% |
| $CH_3$ | $iC_4H_9O$ | $t.C_4H_9$ | H | H | Smp. 75–77° |
| | | | | | Analyse |
| $C_2H_5$ | $C_2H_5O$ | $C_2H_5$ | H | $C_2H_5$ | ber. C 42,55% H 8,2% N 9,93% P 10,9% |
| | | | | | gef. C 42,9% H 7,9% N 9,93% P 10,1% |
| $C_2H_5$ | $C_2H_5O$ | $C_2H_5$ | $CH_3$ | $CH_3$ | ber. C 42,55% H 7,9% N 9,93% P 10,9% |
| | | | | | gef. C 42,3% H 8% N 9,93% P 10,4% |
| $C_2H_5$ | $C_2H_5O$ | $C_2H_5$ | H | $C_6H_5$ | Öl |
| $C_2H_5$ | $CH_3$ | $C_2H_5$ | $CH_3$ | $CH_3$ | ber. C 42,8% H 8,4% N 11,1% P 12,2% |
| | | | | | gef. C 41,8% H 8,2% N 10,9% P 11,8% |
| $C_2H_5$ | $C_2H_5$ | $C_2H_5$ | H | $C_2H_5$ | Öl |
| $C_2H_5$ | $C_2H_5$ | $C_2H_5$ | H | $C_6H_5$ | Öl |

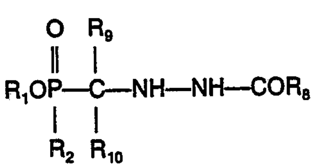

| $R_1$ | $R_2$ | $R_8$ | $R_9$ | $R_{10}$ | physikalische Daten |
|---|---|---|---|---|---|
| $C_2H_5$ | $C_2H_5O$ | Benzyl | H | H | Analyse<br>ber. C 52,0% H 7,05% N 9,3% P 10,3%<br>gef. C 51,8% H 7,1% N 9,0% P 10,1% |
| iso$C_3H_7$ | iso$C_3H_7$ | Benzyl | H | H | Öl |
| $C_2H_5$ | $CH_3$ | Benzyl | H | H | Öl |
| $C_2H_5$ | $C_2H_5O$ | Phenyläthyl | H | H | Analyse<br>ber. C 53,5% H 7,4% N 8,9% P 9,8%<br>gef. C 53,3% H 7,5% N 8,9% P 9,6% |
| iso$C_3H_7$ | iso$C_3H_7O$ | Phenyläthyl | H | H | |
| $C_2H_5$ | $CH_3$ | Phenyläthyl | H | H | |

Beispiel 2:
Herstellung von Hydrazino-N-äthoxycarbonyl-N'-methylphosphonsäure (Zwischenprodukt)

$$(HO)_2PO-CH_2-NHNH-COOC_2H_5$$

Im Sulfierkolben legt man eine Lösung von 10 g Hydrazino-N-carbäthoxy-N-methyl-diisopropyl-phosphonat in 60 ml Chloroform vor und tropft unter Rühren bei Raumtemperatur 38,5 g Trimethylbromsilan zu. Nachdem alles zugetropft ist, rührt man während 24 Stunden bei Raumtemperatur weiter. Dann wird das Lösungsmittel am Rotationsverdampfer entfernt und der Rückstand am Hochvakuum getrocknet. Die halbfeste Masse wird in 20 ml Äthanol aufgenommen, mit Propylenoxid versetzt und nach Zugabe von 60 ml Äther eine Stunde lang verrührt. Man erhält so das Titelprodukt als weisse Kristalle, welche abfiltriert und getrocknet werden. Ausbeute 4,5 g; Zersetzungspunkt 204–206°.

Diese Verbindung kann ebenfalls durch 3-stündiges Kochen von Hydrazino-N-carbäthoxy-N'-methyl-diisopropyl-phosphonat in 4%iger Bromwasserstoffsäure erhalten werden.

Beispiel 3:
Herstellung von Hydrazinomethyl-O,O-diäthyl-phosphonat

$$H_2N-NH-CH_2-PO(OC_2H_5)_2$$

Man löst 168 g Hydrazino-N-benzyloxycarbonyl-N'-methyl-O,O-diäthylphosphonat in 2 l Äthanol und decarboxyliert die Substanz hydrogenolytisch unter Zusatz von 1,1 Mol-Äquivalent HCl-Gas und etwas Palladium/Kohle 5% Katalysator. Nachdem die Wasserstoffaufnahme zum Stillstand gekommen ist wird der Katalysator abgetrennt, der Alkohol unter vermindertem Druck abdestilliert und der Rückstand in 500 ml Äthylacetat und 250 ml Wasser aufgenommen. Die Phasen werden getrennt und die organische Phase nochmals mit Wasser extrahiert. Die wässerigen Phasen werden vereinigt, bei 50° und 1 mbar Druck eingeengt. Der Rückstand wird bei 50° und 0.05 mbar getrocknet. Es verbleiben 104,5 g Hydrazino-N-methyl-O,O-diäthylphosphonat-hydrochlorid als gelbes Öl.

Analyse berechnet:
C 25,2 H 7,4 N 11,7 Cl 16,4 P 13,0%
gefunden:
C 25,5 H 7,3 N 11,6 Cl 16,5 P 13,0%

Das Produkt enthält 1,1 Mol-Äquivalent HCl und 0,8 Mol-Äquivalent Kristallwasser.

Man suspendiert 53,0 g dieses Hydrochlorids in 1 l Methylenchlorid und kühlt auf −5° ab. Dann wird unter Rühren und gutem Kühlen 31,6 g 30%ige Natronlauge zugetropft. Anschliessend wird portionenweise soviel Kaliumcarbonat zugegeben bis alles Wasser gebunden ist. Die Methylenchloridlösung wird abdekantiert und das Kaliumcarbonat zweimal mit Methylenchlorid digeriert. Die organischen Phasen werden zusammengegeben, getrocknet und das Lösungsmittel wird verdampft. Es verbleibt 38,3 g Titelprodukt als helles Öl.

Spektralangaben: $^1H$ NMR $CH_3$ (t, 6H, 1,2 ppm), $P-CH_2$ (d, 2H, 3,08 ppm) $NHNH_2$ (s, 3H, 3,65 ppm), $OCH_2$ (q, 4H, 4,02 ppm) ($CDCl_3$, 60 MHz).

Analog zu diesem Beispiel wurden auch Hydrazinomethyl-O-isopropylmethyl-phosphinat und sein Hydrochloridsalz hergestellt.

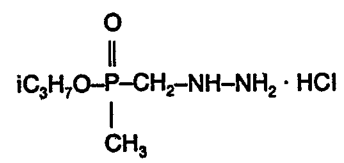

Spektralangaben: $^1H$ NMR $CH_3$ (d, 6H, 0,95 ppm), $P-CH_3$, >CH–(m, 4H, 1,8 ppm) $OHC_2$, $P-CH_2$ (m, 4H, 3,75 ppm), $NHNH_2$ (s, 4,85 ppm) ($D_2O$, 60 MHz).

Beispiel 4:
Herstellung von Hydrazinomethyl-methyl-phosphinsäure (Zwischenprodukt)

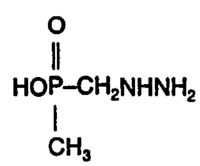

Ein Gemisch von 6,8 g Hydrazinomethyl-O-isopropoxymethyl-phosphinathydrochlorid und 50 ml 6N Salzsäure wird während 5 Stunden am Rückfluss erwärmt und anschliessend unter vermindertem Druck am Rotationsverdampfer eingeengt. Der Rückstand wird bei 50° im Hochvakuum getrocknet. Man erhält 5,6 g einer zähen, halbfesten Masse, welche man in Äthanol verrührt, filtriert und im Hochvakuum trocknet. Man erhält so 2,2 g Hydrazinomethyl-methylphosphinsäure als weisses Pulver.

$^1$H-NMR (in $D_2O$) $CH_3P$ 1,37 (d, $J_{PCH}$ 14 Hz, 3H); $CH_2P$ 3,15 (d, $J_{PCH}$ 11 Hz, 2H); NH, OH 4,9 (s) (ppm).

Beispiel 5:
Herstellung von Hydrazinomethan-phosphonsäure (Zwischenprodukt)

$$(HO)_2PO{-}CH_2NHNH_2$$

Ein Gemisch von 64 g N-Benzoyl-N'-methyl-diäthylphosphonyl-hydrazin und 400 ml 6N Salzsäure wird unter Rühren 20 Stunden unter Rückfluss gekocht. Der entstehende Alkohol wird fortlaufend mittels einer Destillationsbrücke aus dem Reaktionsgemisch entfernt. Dann wird mittels Eisbad auf 5° abgekühlt, die ausgefallene Benzoesäure aus dem Reaktionsgemisch abfiltriert und mit wenig Eiswasser gewaschen. Das Filtrat samt Waschwasser wird am Rotationsverdampfer eingeengt. Der zurückbleibende ölige Rückstand wird in wenig Wasser gelöst und unter Rühren und Kühlen mit Propylenoxid auf pH 4 gestellt. Dabei fällt ein Niederschlag aus, der abgenutscht, mit wenig Eiswasser gewaschen und aus Wasser unter Zusatz von etwas Aktivkohle umkristallisiert wird. Man erhält so 12 g (42,6% der Theorie) Hydrazinomethanphosphonsäure als weisse Kristalle, welche einen Zersetzungspunkt von 196° haben.

Beispiel 6:
Herstellung von Hydrazino-N'-chloracetyl-N'-methyl-O,O-diäthylphosphonat

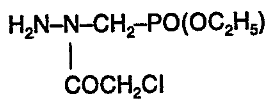

Eine Lösung von 20 g
Hydrazino-N-benzyloxycarbonyl-N'-chloracetyl-N'-methyl-O,O-diäthylphosphonat
in 200 ml Äthanol wird unter Zugabe von 1,1 Mol Äquivalent HCl-Gas und etwas Palladium/Kohle 5% Katalysator hydriert. Nachdem die Wasserstoffaufnahme zum Stillstand gekommen ist, wird er abgetrennt und das Filtrat eingeengt. Das verbleibende Öl wird in Äthylacetat und Wasser aufgenommen und die Phasen werden getrennt. Die wässerige Phase wird mit Triäthylamin neutralisiert und mit Äther extrahiert. Die vereinigten Äthylacetat- und Ätherphasen werden getrocknet, eingeengt und das verbleibende Öl wird über Kieselgel mit einer Methylenchlorid/Methanol 95:5 Lösung chromatographiert. Nach Verdampfen des Lösungsmittels verbleibt ein wachsartiges Produkt

Analyse berechnet:
C 32,51 H 6,25 N 10,83 Cl 13,71 P 11,97%
gefunden:
C 32,14 H 6,13 N 10,77 Cl 13,48 P 11,89%

Beispiel 7:
Herstellung von N,N'-Bis-dichloracetylhydrazinomethyl-O,O-diäthyl-phosphonat.

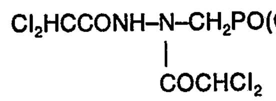

Man löst bei −5°C im Sulfierkolben 7,0 g (0,0384 Mol) Hydrazinomethanphosphonsäurediäthylester und 15,3 ml (0,0845 Mol) Diisopropylamin in einem Gemisch von 90 ml Tetrahydrofuran und 60 ml Cyclohexan. Dazu tropft man unter Kühlen und Rühren 8,35 ml (0,0845 Mol) Dichloracetylchlorid. Man lässt eine Stunde bei Raumtemperatur ausrühren, nutscht dann das Aminhydrochlorid ab und entfernt das Lösungsmittel am Wasserstrahlvakuum. Das zurückbleibende braune Öl (24,3 g) wird in 250 ml Äthylacetat gelöst, zweimal mit je 50 ml Wasser gewaschen, getrocknet und im Rotationsverdampfer eingeengt. Nach dem Trocknen am Hochvakuum verbleiben 16,3 g beiges Pulver. Dieses wird mit Methylenchlorid/Methanol 95:5 über eine Silikagelkolonne chromatographiert. Nach dem Verdampfen des Lösungsmittels erhält man 8,1 g
N,N'-Dichloracetyl-hydrazinomethan-phosphonsäure-diäthyläther
vom Schmelzpunkt 121–123°.

Analyse berechnet:
C 26,76 H 3,74 N 6,94 Cl 35,1 P 7,67%
gefunden:
C 27,0 H 3,6 N 6,9 Cl 34,8 P 7,7%

In analoger Weise zu diesen Beispielen werden die folgenden Verbindungen hergestellt:

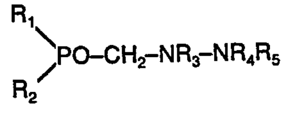

| No. | $R_1$ | $R_2$ | $R_3$ | $R_4$ | $R_5$ | phys. Daten |
|---|---|---|---|---|---|---|
| 1 | $C_2H_5O$ | $C_2H_5O$ | $COCH_2Cl$ | $COOCH_2C_6H_5$ | H | Wachs |
| 2 | $C_2H_5O$ | $C_2H_5O$ | $COCHCl_2$ | $COOCH_2C_6H_5$ | H | Wachs |
| 3 | $iC_3H_7O$ | $iC_3H_7O$ | $COCH_2Cl$ | $COOCH_2C_6H_5$ | H | |
| 4 | $iC_3H_7O$ | $iC_3H_7O$ | $COCHCl_2$ | $COOCH_2C_6H_5$ | H | Öl (gelb) |

| No. | $R_1$ | $R_2$ | $R_3$ | $R_4$ | $R_5$ | phys. Daten |
|---|---|---|---|---|---|---|
| 5 | $C_2H_5O$ | $C_2H_5O$ | $COCH_2Cl$ | $COCH_2Cl$ | H | Smp. 98–101° |
| 6 | $iC_3H_7O$ | $iC_3H_7O$ | $COCCl_3$ | $COOC_2H_5$ | H | Smp. 75–77° |
| 7 | $C_2H_5O$ | $C_2H_5$ | $COCH_2Cl$ | $COOCH_2C_6H_5$ | H | |
| 8 | $C_2H_5O$ | $C_2H_5$ | $COCHCl_2$ | $COOCH_2C_6H_5$ | H | Smp. 86–89 |
| 9 | $CH_3$ | $CH_3$ | $COCH_2Cl$ | $COOCH_2C_6H_5$ | H | |
| 10 | $CH_3$ | $CH_3$ | $COCHCl_2$ | $COOCH_2C_6H_5$ | H | |
| 11 | $iC_3H_7O$ | $CH_3$ | $COCHCl_2$ | $COOCH_2C_6H_5$ | H | 87–88° |
| 12 | $C_2H_5O$ | $C_2H_5O$ | $COCH_2Cl$ | $COOCH_3$ | H | Öl (gelb) |
| 13 | $C_2H_5O$ | $C_2H_5O$ | $COCHCl_2$ | $COOCH_3$ | H | Smp. 95–98 °C |
| 14 | $iC_4H_9O$ | $CH_3$ | $COCH_2Cl$ | $COOCH_3$ | H | Öl |
| 15 | $iC_4H_9O$ | $CH_3$ | $COCHCl_2$ | $COOCH_3$ | H | Smp. 83–86° C |
| 16 | $CH_3$ | $CH_3$ | $COCH_2Cl$ | $COOCH_3$ | H | |
| 17 | $CH_3$ | $CH_3$ | $COCHCl_2$ | $COOCH_3$ | H | |
| 18 | $C_2H_5O$ | $C_2H_5O$ | $COCH_2Cl$ | $COOC(CH_3)_3$ | H | Smp. 74–80° C |
| 19 | $C_2H_5O$ | $C_2H_5O$ | $COCHCl_2$ | $COOC(CH_3)_3$ | H | Smp. 112–114° C |
| 20 | $C_2H_5O$ | $C_2H_5O$ | $COCCl=CCl_2$ | $COOC(CH_3)_3$ | H | Smp. 69–73° C |
| 21 | $iC_4H_9O$ | $CH_3$ | $COCH_2Cl$ | $COOC(CH_3)_3$ | H | Smp. 93–97° C |
| 22 | $iC_4H_9O$ | $CH_3$ | $COCHCl_2$ | $COOC(CH_3)_3$ | H | Smp. 76–78° C |
| 23 | $CH_3$ | $CH_3$ | $COCH_2Cl$ | $COOC(CH_3)_3$ | H | |
| 24 | $CH_3$ | $CH_3$ | $COCHCl_2$ | $COOC(CH_3)_3$ | H | |
| 25 | $C_2H_5O$ | $C_2H_5O$ | $COCCl=CCl_2$ | $COOCH_2C_6H_5$ | H | Smp. 50–53° |
| 26 | $iC_3H_7O$ | $iC_3H_7O$ | $COCCl=CCl_2$ | $COOCH_2C_6H_5$ | H | |
| 27 | $iC_4H_9O$ | $CH_3$ | $COCCl=CCl_2$ | $COOCH_2C_6H_5$ | H | Smp. 107–108° |
| 28 | $C_2H_5$ | $C_2H_5$ | $COCCl=CCl_2$ | $COOCH_2C_6H_5$ | H | |
| 29 | $CH_3$ | $CH_3$ | $COCCl=CCl_2$ | $COOCH_2C_6H_5$ | H | |
| 30 | $C_2H_5O$ | $C_2H_5O$ | $COCCl=CCl_2$ | $COOCH_3$ | H | Smp. 79–82° |
| 31 | $iC_4H_9O$ | $CH_3$ | $COCCl=CCl_2$ | $COOCH_3$ | H | Smp. 124–128° |
| 32 | $C_2H_5$ | $C_2H_5$ | $COCCl=CCl_2$ | $COOCH_3$ | H | |
| 33 | $CH_3$ | $CH_3$ | $COCCl=CCl_2$ | $COOCH_3$ | H | |
| 34 | $C_2H_5O$ | $C_2H_5O$ | $COCCl=CCl_2$ | $COOC(CH_3)_3$ | H | |
| 35 | $iC_4H_9O$ | $CH_3$ | $COCCl=CCl_2$ | $COOC(CH_3)_3$ | H | Smp. 80–83° |
| 36 | $C_2H_5$ | $C_2H_5$ | $COCCl=CCl_2$ | $COOC(CH_3)_3$ | H | |
| 37 | $CH_3$ | $CH_3$ | $COCCl=CCl_2$ | $COOC(CH_3)_3$ | H | |
| 38 | $C_2H_5O$ | $C_2H_5O$ | $COCH_2Cl$ | $COOC_2H_5$ | H | Öl |

| No. | $R_1$ | $R_2$ | $R_3$ | $R_4$ | $R_5$ | phys. Konst. |
|---|---|---|---|---|---|---|
| 39 | $C_2H_5O$ | $C_2H_5O$ | $COCHCl_2$ | $COOC_2H_5$ | H | Öl |
| 40 | $C_2H_5O$ | $C_2H_5O$ | $COCCl=CCl_2$ | $COOC_2H_5$ | H | Smp. 60–62° |
| 41 | $iC_4H_9O$ | $CH_3$ | $COCH_2Cl$ | $COOC_2H_5$ | H | Harz |
| 42 | $iC_4H_9O$ | $CH_3$ | $COCHCl_2$ | $COOC_2H_5$ | H | Smp. 76–78° |
| 43 | $iC_4H_9O$ | $CH_3$ | $COCCl=CCl_2$ | $COOC_2H_5$ | H | Smp. 94–96° |
| 44 | $C_2H_5$ | $C_2H_5$ | $COCH_2Cl$ | $COOC_2H_5$ | H | |
| 45 | $C_2H_5$ | $C_2H_5$ | $COCHCl_2$ | $COOC_2H_5$ | H | Smp. 117–119° |
| 46 | $C_2H_5$ | $C_2H_5$ | $COCCl=CCl_2$ | $COOC_2H_5$ | H | |
| 47 | $CH_3$ | $CH_3$ | $COCH_2Cl$ | $COOC_2H_5$ | H | |
| 48 | $CH_3$ | $CH_3$ | $COCHCl_2$ | $COOC_2H_5$ | H | |
| 49 | $CH_3$ | $CH_3$ | $COCCl=CCl_2$ | $COOC_2H_5$ | H | |
| 50 | $C_2H_5O$ | $C_2H_5O$ | $COCH_2Cl$ | H | H | Öl (gelb) |
| 51 | $C_2H_5O$ | $C_2H_5O$ | $COCHCl_2$ | H | H | |
| 52 | $C_2H_5O$ | $C_2H_5O$ | $COCCl=CCl_2$ | H | H | |
| 53 | $C_2H_5O$ | $C_2H_5O$ | $COCHCl_2$ | $COCHCl_2$ | H | Smp. 121–123° |
| 54 | $C_2H_5O$ | $C_2H_5O$ | $COCCl=CCl_2$ | $COCHCl_3$ | H | |
| 55 | $iC_4H_9O$ | $CH_3$ | $COCH_2Cl$ | H | H | |
| 56 | $iC_4H_9O$ | $CH_3$ | $COCHCl_2$ | H | H | |
| 57 | $iC_4H_9O$ | $CH_3$ | $COCCl=CCl_2$ | H | H | |
| 58 | $iC_4H_9O$ | $CH_3$ | $COCH_2Cl$ | $COCHCl_2$ | H | |
| 59 | $iC_4H_9O$ | $CH_3$ | $COCHCl_2$ | $COCHCl_2$ | H | Smp. 125–129° |
| 60 | $iC_4H_9O$ | $CH_3$ | $COCl=CCl_2$ | $COCHCl_2$ | H | |
| 61 | $C_2H_5$ | $C_2H_5$ | $COCH_2Cl$ | H | H | |
| 62 | $C_2H_5$ | $C_2H_5$ | $COCHCl_2$ | H | H | |
| 63 | $C_2H_5$ | $C_2H_5$ | $COCCl=CCl_2$ | H | H | |

| No. | $R_1$ | $R_2$ | $R_3$ | $R_4$ | $R_5$ | phys. Konst. |
|---|---|---|---|---|---|---|
| 64 | $C_2H_5$ | $C_2H_5$ | $COCH_2Cl$ | $COCHCl_2$ | H | |
| 65 | $C_2H_5$ | $C_2H_5$ | $COCHCl_2$ | $COCHCl_2$ | H | |
| 66 | $C_2H_5$ | $C_2H_5$ | $COCCl=CCl_2$ | $COCHCl_2$ | H | |
| 67 | $CH_3$ | $CH_3$ | $COCH_2Cl$ | H | H | |
| 68 | $CH_3$ | $CH_3$ | $COCHCl_2$ | H | H | |
| 69 | $CH_3$ | $CH_3$ | $COCCl=CCl_2$ | H | H | |
| 70 | $CH_3$ | $CH_3$ | $COCH_2Cl$ | $COCHCl_2$ | H | |
| 71 | $CH_3$ | $CH_3$ | $COCHCl_2$ | $COCHCl_2$ | H | |
| 72 | $C_2H_5O$ | $C_2H_5O$ | $COCH_2Cl$ | $CH_2CH=CH_2$ | H | |
| 73 | $C_2H_5O$ | $C_2H_5O$ | $COCHCl_2$ | $CH_2CH=CH_2$ | H | |
| 74 | $C_2H_5O$ | $C_2H_5O$ | $COCH_2Cl$ | $CH_2C_6H_5$ | H | |
| 75 | $C_2H_5O$ | $C_2H_5O$ | $COCHCl_2$ | $CH_2C_6H_5$ | H | |
| 76 | $C_2H_5O$ | $C_2H_5O$ | $COCH_2Cl$ | $COCH_3$ | H | |
| 77 | $C_2H_5O$ | $C_2H_5O$ | $COCHCl_2$ | $COCH_3$ | H | |
| 78 | $C_2H_5O$ | $C_2H_5O$ | $COCH_2Cl$ | $COC_6H_5$ | H | |
| 79 | $C_2H_5O$ | $C_2H_5O$ | $COCHCl_2$ | $COC_6H_5$ | H | |
| 80 | $iC_4H_9O$ | $CH_3$ | $COCH_2Cl$ | $C_2H_5$ | H | |
| 81 | $iC_4H_9O$ | $CH_3$ | $COCHCl_2$ | $C_2H_5$ | H | |
| 82 | $iC_4H_9O$ | $CH_3$ | $COCH_2Cl$ | $CH_2C_6H_5$ | H | |
| 83 | $iC_4H_9O$ | $CH_3$ | $COCHCl_2$ | $CH_2C_6H_5$ | H | |
| 84 | $iC_4H_9O$ | $CH_3$ | $COCH_2Cl$ | $COCH_3$ | H | |
| 85 | $iC_4H_9O$ | $CH_3$ | $COCH_2Cl_2$ | $COCH_3$ | H | |
| 86 | $iC_4H_9O$ | $CH_3$ | $COCH_2Cl$ | $COC_6H_5$ | H | |
| 87 | $iC_4H_9O$ | $CH_3$ | $COCHCl_2$ | $COC_6H_5$ | H | |
| 88 | $CH_3$ | $CH_3$ | $COCH_2Cl$ | $C_2H_5$ | H | |
| 89 | $CH_3$ | $CH_3$ | $COCHCl_2$ | $C_2H_5$ | H | |
| 90 | $CH_3$ | $CH_3$ | $COCH_2Cl$ | $CH_2C_6H_5$ | H | |
| 91 | $CH_3$ | $CH_3$ | $COCHCl_2$ | $CH_2C_6H_5$ | H | |
| 92 | $CH_3$ | $CH_3$ | $COCH_2Cl$ | $COCH_3$ | H | |
| 93 | $CH_3$ | $CH_3$ | $COCHCl_2$ | $COCH_3$ | H | |
| 94 | $CH_3$ | $CH_3$ | $COCH_2Cl$ | $COC_6H_5$ | H | |
| 95 | $CH_3$ | $CH_3$ | $COCHCl_2$ | $COC_6H_5$ | H | |
| 96 | $CH_3$ | $CH_3$ | $COCH_2Cl$ | $CH_2CH=CH_2$ | H | |
| 97 | $CH_3$ | $CH_3$ | $COCHCl_2$ | $CH_2CH=CH_2$ | H | |
| 98 | $iC_3H_7O$ | $iC_3H_7O$ | $COCH_2Cl$ | $COOC_2H_5$ | H | Smp. 62–68° |
| 99 | $iC_3H_7O$ | $iC_3H_7O$ | $COCHCl_2$ | $COOC_2H_5$ | H | Smp. 69–70 |
| 100 | $iC_3H_7O$ | $iC_3H_7O$ | $COCCl=CCl_2$ | $COOC_2H_5$ | H | Smp. 108–110° |
| 101 | $iC_4H_9O$ | $CH_3$ | $COCHCl_2$ | $COOCH_2C_6H_5$ | H | Smp. 84–85° |
| 102 | $iC_4H_9O$ | $CH_3$ | $COCH_2Cl$ | $COOCH_2C_6H_5$ | H | Smp. 82–85° |
| 103 | HO | HO | $COCHCl_2$ | $COOCH_3$ | H | Smp. 145–147° * |
| 104 | HO | HO | $COCHCl_2$ | $COOC_2H_5$ | H | Smp. 92–94°* |
| 105 | $C_2H_5O$ | $CH_3$ | $COCHCl_2$ | $COOCH_2C_6H_5$ | H | Öl |
| 106 | $C_2H_5O$ | $CH_3$ | $COCHCl_2$ | $COOCH_3$ | H | Smp. 130–138° |
| 107 | $C_2H_5O$ | $CH_3$ | $COCHCl_2$ | $COOC_2H_5$ | H | Smp. 110–112° |
| 108 | $C_2H_5O$ | $CH_3$ | $COCHCl_2$ | $COOC(CH_3)_3$ | H | Smp. 99–101° |
| 109 | $C_2H_5O$ | $C_2H_5O$ | $COCHCl_2$ | $COCH_2C_6H_5$ | H | Smp. 106–108° |
| 110 | $C_2H_5O$ | $C_2H_5O$ | $COCHCl_2$ | $COCH_2CH_2C_6H_5$ | H | Smp. 87–89° |
| 111 | $C_2H_5O$ | $CH_3$ | $COCHCl_2$ | $COCH_2C_6H_5$ | H | Smp. 88–89° |
| 112 | $C_2H_5O$ | $CH_3$ | $COCHCl_2$ | $COCH_2CH_2C_6H_5$ | H | |
| 113 | $iC_3H_7O$ | $iC_3H_7O$ | $COCHCl_2$ | $COCH_2C_6H_5$ | H | |
| 114 | $iC_3H_7O$ | $iC_3H_7O$ | $COCHCl_2$ | $COCH_2CH_2C_6H_5$ | H | |
| 115 | $iC_3H_7$ | $iC_3H_7$ | $COCl_3$ | $COOC_2H_5$ | H | Smp. 75–77° |
| 116 | HO | HO | $COCHCl_2$ | $COOCH_3$ | H | Smp. 145–147°* |
| 117 | HO | HO | $COCHCl_2$ | $COOC_2H_5$ | H | Smp. 92–94°* |

* Diisopropylaminsalz

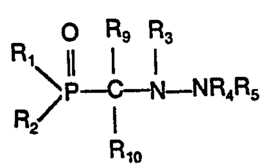

| No. | $R_1$ | $R_2$ | $R_3$ | $R_4$ | $R_5$ | $R_9$ | $R_{10}$ | phys. Konst. |
|---|---|---|---|---|---|---|---|---|
| 118 | $C_2H_5O$ | $C_2H_5O$ | $COCHCl_2$ | $COOC_2H_5$ | H | H | $C_2H_5$ | Öl |
| 119 | $C_2H_5O$ | $C_2H_5O$ | $COCHCl_2$ | $COOC_2H_5$ | H | H | Phenyl | Smp. 88–90° |
| 120 | $C_2H_5$ | $C_2H_5$ | $COCHCl_2$ | $COOC_2H_5$ | H | H | $C_2H_5$ | Smp. 85–88° |
| 121 | $C_2H_5O$ | $C_2H_5$ | $COCHCl_2$ | $COOC_2H_5$ | H | H | Phenyl | |
| 122 | $C_2H_5O$ | $CH_3$ | $COCHCl_2$ | $COOC_2H_5$ | H | $CH_3$ | $CH_3$ | |

Beispiel 8:
Formulierungsbeispiele für Wirkstoffe der Formel I oder Mischungen dieser Wirkstoffe mit Herbiziden

| a) Spritzpulver | a) | b) | c) |
|---|---|---|---|
| Wirkstoff der Formel I oder Mischung mit Herbizid | 20% | 60% | 0,5% |
| Na-Ligninsulfonat | 5% | 5% | 5% |
| Na-Laurylsulfat | 3% | – | – |
| Na-Diisobutyl-naphthalinsulfonat | – | 6% | 6% |
| Octylphenolpoly-äthylenglykoläther (7–8 Mol AeO) | – | 2% | 2% |
| Hochdisperse Kiesel-säure | 5% | 27% | 27% |
| Kaolin | 67% | – | – |
| Natriumchlorid | – | – | 59,5% |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsion-Konzentrat | a) | b) |
|---|---|---|
| Wirkstoff der Formel I oder Mischung mit Herbizid | 10% | 1% |
| Octylphenolpolyäthylenglykol-äther (4–5 Mol AeO) | 3% | 3% |
| Ca-Dodecylbenzolsulfonat | 3% | 3% |
| Ricinusölpolyglykoläther (36 Mol AeO) | 4% | 4% |
| Cyclohexanon | 30% | 10% |
| Xylolgemisch | 50% | 79% |

Aus diesem Konzentrat können durch Verdünnen mit Wasser Emulsionen jeder gewünschten Konzentration hergestellt werden.

| c) Stäubemittel | a) | b) |
|---|---|---|
| Wirkstoff der Formel I oder Mischung mit Herbizid | 0,1% | 1% |
| Talkum | 99,9% | – |
| Kaolin | – | 99% |

Man erhält anwendungsfertige Stäubemittel, indem der Wirkstoff mit dem Träger vermischt und auf einer geeigneten Mühle vermahlen wird.

| d) Extruder Granulat | a) | b) |
|---|---|---|
| Wirkstoff der Formel I oder Mischung mit Herbizid | 10% | 1% |
| Na-Ligninsulfonat | 2% | 2% |
| Carboxymethylcellulose | 1% | 1% |
| Kaolin | 87% | 96% |

Der Wirkstoff wird mit den Zusatzstoffen vermischt, vermahlen und mit Wasser angefeuchtet. Dieses Gemisch wird extrudiert und anschliessend im Luftstrom getrocknet.

| e) Umhüllungs-Granulat | |
|---|---|
| Wirkstoff der Formel I oder Mischung mit Herbizid | 3% |
| Polyäthylenglykol (MG 200) | 3% |
| Kaolin | 94% |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

| f) Suspensions-Konzentrat | a) | b) |
|---|---|---|
| Wirkstoff der Formel I oder Mischung mit Herbizid | 40% | 5% |
| Äthylenglykol | 10% | 10% |
| Nonylphenolpolyäthylenglykol-äther (15 Mol AeO) | 6% | 1% |
| Na-Ligninsulfonat | 10% | 5% |
| Carboxymethylcellulose | 1% | 1% |
| 37%ige wässrige Formal-dehyd-Lösung | 0,2% | 0,2% |
| Silikonöl in Form einer 75%igen wässrigen Emulsion | 0,8% | 0,8% |
| Wasser | 32% | 77% |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

| g) Salzlösung | |
|---|---|
| Wirkstoff der Formel I oder Mischung mit Herbizid | 5% |
| Isopropylamin | 1% |
| Octylphenolpolyäthylenglykol-äther (78 Mol AeO) | 3% |
| Wasser | 91% |

Biologische Beispiele:

Die Fähigkeit der Verbindungen der Formel I, Kulturpflanzen vor der phytotoxischen Wirkung starker Herbizide zu schützen, kann aus den folgenden Beispielen ersehen werden. In den Versuchsbeschreibungen werden die Verbindungen der Formel I als Antidote (Gegenmittel) bezeichnet.

Beispiel 9:

Versuch mit Herbizid und Gegenmittel in Mais. Herbizid und Gegenmittel werden zusammen als Tankmischung im Vorauflaufverfahren appliziert

Plastikcontainer (25 cm lang × 17 cm breit × 12 cm hoch) werden mit sandiger Lehmerde gefüllt und Maissamen der Sorte LG 5 eingesät. Nach dem Bedecken der Samen wird die als Safener zu prüfende Substanz zusammen mit dem Herbizid in verdünnter Lösung als Tankmischung auf die Bodenoberfläche gesprüht. 21 Tage nach der Applikation wird die Schutzwirkung des Safeners in Prozent ausgewertet. Als Referenz dienen dabei die mit dem Herbizid allein behandelten Pflanzen (keine Schutzwirkung) sowie die vollständig unbehandelte Kontrolle. (100% Wachstum).

Die Resultate sind unten zusammengefasst:

Herbizid:

2-Chlor-2',6'-dimethyl-N-(äthoxymethyl)-acetanilid.

Antidote:

Hydrazino-N-benzyloxycarbonyl-N'-dichloracetyl-N'-methyl-O,O-diäthylphosphonat (Verbindung 1)

| Herbizid | Antidote | relative Schutzwirkung |
|---|---|---|
| 2 kg/ha | 0,25 kg/ha | 25% |
| 2 kg/ha | 0,125 kg/ha | 25% |
| 4 kg/ha | 0,5 kg/ha | 37,5% |
| 4 kg/ha | 0,25 kg/ha | 25% |
| 6 kg/ha | 0,75 kg/ha | 50% |
| 6 kg/ha | 0,375 kg/ha | 37,5% |

Herbizid:

2-Chlor-2'-äthyl-N-(2''-methoxy-1''-methyläthylacet-o-touidid.

Antidote:

Hydrazino-N-benzyloxycarbonyl-N'-dichloracetyl-N'-methyl-O,O-diäthylphosphonat (Verbindung 1)

| Herbizid | Antidote | relative Schutzwirkung |
|---|---|---|
| 2 kg/ha | 0,25 kg/ha | 37,5% |
| 2 kg/ha | 0,125 kg/ha | 37,5% |
| 4 kg/ha | 0,5 kg/ha | 75% |
| 4 kg/ha | 0,25 kg/ha | 75% |
| 6 kg/ha | 0,75 kg/ha | 37,5% |
| 6 kg/ha | 0,375 kg/ha | 37,5% |

Herbizid:

2-Chlor-2',6'-dimethyl-N-(2''-methoxy-1''-methyläthyl)-acetanilid

| Herbizid Aufwandmenge | Antidote No. | Aufwandmenge | relative Schutzwirkung |
|---|---|---|---|
| 4 kg/ha | 1 | 2 kg/ha | 63% |
| 4 kg/ha | 1 | 1 kg/ha | 63% |
| 4 kg/ha | 1 | 0,5 kg/ha | 63% |
| 4 kg/ha | 1 | 0,25 kg/ha | 75% |
| 6 kg/ha | 1 | 3 kg/ha | 75% |
| 6 kg/ha | 1 | 1,5 kg/ha | 75% |
| 6 kg/ha | 1 | 0,75 kg/ha | 75% |
| 6 kg/ha | 1 | 0,375 kg/ha | 75% |
| 4 kg/ha | 8 | 2 kg/ha | 50% |
| 4 kg/ha | 8 | 1 kg/ha | 63% |
| 4 kg/ha | 8 | 0,5 kg/ha | 63% |
| 4 kg/ha | 8 | 0,25 kg/ha | 63% |
| 6 kg/ha | 8 | 3 kg/ha | 50% |
| 6 kg/ha | 8 | 1,5 kg/ha | 63% |
| 6 kg/ha | 8 | 0,75 kg/ha | 63% |
| 6 kg/ha | 8 | 0,375 kg/ha | 75% |
| 4 kg/ha | 11 | 2 kg/ha | 38% |
| 4 kg/ha | 11 | 1 kg/ha | 38% |
| 4 kg/ha | 11 | 0,5 kg/ha | 38% |
| 4 kg/ha | 11 | 0,25 kg/ha | 50% |
| 6 kg/ha | 11 | 3 kg/ha | 50% |
| 6 kg/ha | 11 | 1,5 kg/ha | 50% |
| 6 kg/ha | 11 | 0,75 kg/ha | 50% |
| 6 kg/ha | 11 | 0,375 kg/ha | 38% |
| 4 kg/ha | 13 | 2 kg/ha | 50% |
| 4 kg/ha | 13 | 1 kg/ha | 50% |
| 4 kg/ha | 13 | 0,5 kg/ha | 50% |
| 4 kg/ha | 13 | 0,25 kg/ha | 63% |
| 6 kg/ha | 13 | 3 kg/ha | 50% |
| 6 kg/ha | 13 | 1,5 kg/ha | 63% |
| 6 kg/ha | 13 | 0,75 kg/ha | 50% |
| 6 kg/ha | 13 | 0,375 kg/ha | 75% |
| 4 kg/ha | 42 | 2 kg/ha | 63% |
| 4 kg/ha | 42 | 1 kg/ha | 63% |
| 4 kg/ha | 42 | 0,5 kg/ha | 75% |
| 4 kg/ha | 42 | 0,25 kg/ha | 75% |
| 6 kg/ha | 42 | 3 kg/ha | 63% |
| 6 kg/ha | 42 | 1,5 kg/ha | 75% |
| 6 kg/ha | 42 | 0,75 kg/ha | 75% |
| 6 kg/ha | 42 | 0,375 kg/ha | 75% |
| 4 kg/ha | 99 | 2 kg/ha | 50% |
| 4 kg/ha | 99 | 1 kg/ha | 38% |
| 4 kg/ha | 99 | 0,5 kg/ha | 50% |
| 4 kg/ha | 99 | 0,25 kg/ha | 38% |
| 6 kg/ha | 99 | 3 kg/ha | 63% |
| 6 kg/ha | 99 | 1,5 kg/ha | 63% |
| 6 kg/ha | 99 | 0,75 kg/ha | 63% |
| 6 kg/ha | 99 | 0,375 kg/ha | 63% |

**Patentansprüche**

1. Acylierte Hydrazinomethylphosphonsäuren, -phosphonate, -phosphinsäuren, -phosphinate und -phosphinoxide der Formel I

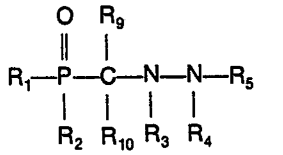 (I)

worin

$R_1$ und $R_2$ unabhängig voneinander je Hydroxy, $C_1$–$C_4$-Alkyl, Aryl, $C_1$–$C_4$-Alkoxy, $C_2$–$C_4$-Alkenyloxy, $C_2$–$C_4$-Alkinyloxy, $C_2$–$C_4$-Halogenalkoxy mit 1 bis 5 Halogenatomen, $C_2$–$C_8$-Alkoxyalkoxy, $C_1$–$C_4$-Cyanoalkoxy, $C_1$–$C_4$-Phenylalkoxy oder Aryloxy, welches unsubstituiert oder im Phenylkern durch Halogen, Cyan, Nitro oder $C_1$–$C_4$-Alkoxy substituiert ist,

$R_3$ einen Halogenalkanoylrest $-COCX_1X_2-R_6$ oder einen durch 1 bis 3 Halogenatome substituierten Alkenoylrest mit 2 bis 4 Kohlenstoffatomen im Alkenylteil;

$R_4$ Wasserstoff, dasselbe wie $R_3$, einen Rest $-COOR_7$, $-COR_8$ oder einen $C_1$–$C_4$-Alkyl-, $C_2$–$C_4$-Alkenyl- oder $C_1$–$C_4$-Phenylalkylrest, welcher im Phenylring gegebenenfalls durch Halogen, Cyan, Nitro oder $C_1$–$C_4$ Alkoxy substituiert ist,

$R_5$ Wasserstoff oder einen $C_1$–$C_4$-Alkyl-, $C_2$–$C_4$-Alkenyl-, oder $C_2$–$C_4$-Alkinylrest ist,

$R_6$ Wasserstoff, Halogen oder einen $C_1$–$C_6$-Alkylrest;

$R_7$ einen $C_1$–$C_4$-Alkyl- oder $C_1$–$C_4$-Phenylalkylrest, welcher im Phenylring gegebenenfalls durch Halogen, Cyan, Nitro oder $C_1$–$C_4$-Alkoxy substituiert ist,

$R_8$ einen $C_1$–$C_4$-Alkyl-, $C_2$–$C_4$-Alkenyl-, $C_2$–$C_4$-Alkinyl-, Phenyl oder $C_1$–$C_4$-Phenylalkylrest, der gegebenenfalls durch Halogen, Cyan, Nitro oder $C_1$–$C_4$-Alkoxy substituiert ist und

$R_9$ Wasserstoff, $C_1$–$C_4$ Alkyl oder Phenyl welches gegebenenfalls durch Halogen, Cyan, Nitro oder $C_1$–$C_4$ Alkoxy substituiert ist,

$R_{10}$ Wasserstoff oder $C_1$–$C_4$ Alkyl und

$X_1$ und $X_2$ je Halogen oder einer der Reste $X_1$ oder $X_2$ auch Wasserstoff bedeuten.

2. Acylierte Hydrazinomethylphosphonsäuren und -phosphonate gemäss Anspruch 1 der Formel I worin $R_1$ und $R_2$ unabhängig voneinander je Hydroxy oder $C_1$–$C_4$-Alkoxy bedeuten und die Reste $R_3$ bis $R_{10}$, $X_1$ und $X_2$ die in Anspruch 1 angegebenen Bedeutungen haben.

3. Hydrazino-N-benzyloxycarbonyl-N′-chloracetyl-N′-methyl-O,O-diäthylphosphonat gemäss Anspruch 2.

4. Hydrazino-N-benzyloxycarbonyl-N′-dichloracetyl-N′-methyl-O,O-diäthylphosphonat gemäss Anspruch 2.

5. Hydrazino-N-benzyloxycarbonyl-N′-dichloracetyl-N′-methyl-O,O-diisopropylphosphonat gemäss Anspruch 2.

6. Hydrazino-N-methoxycarbonyl-N′-chloracetyl-N′-methyl-O,O-diäthylphosphonat gemäss Anspruch 2.

7. Hydrazino-N-methoxycarbonyl-N′-dichloracetyl-N′-methyl-O,O-diäthylphosphonat gemäss Anspruch 2.

8. Hydrazino-N-t.butoxycarbonyl-N′-chloracetyl-N′-methyl-O,O-diäthylphosphonat gemäss Anspruch 2.

9. Hydrazino-N-t.butyloxycarbonyl-N′-dichloracetyl-N′-methyl-O,O-diäthylphosphonat gemäss Anspruch 2.

10. Hydrazino-N-äthoxycarbonyl-N′-dichloracetyl-N′-methyl-O,O-diisopropylphosphonat gemäss Anspruch 2.

11. Hydrazino-N′-chloracetyl-N′-methyl-O,O-diäthylphosphonat gemäss Anspruch 2.

12. Acylierte Hydrazinomethylphosphinate gemäss Anspruch 1 der Formel I, worin $R_1$ Hydroxy, oder $C_1$–$C_4$-Alkoxy, $R_2$ $C_1$–$C_4$-Alkyl bedeuten und die Reste $R_3$ bis $R_{10}$, $X_1$ und $X_2$ die in Anspruch 1 angegebenen Bedeutungen haben.

13. Hydrazino-N-benzyloxycarbonyl-N′-dichloracetyl-N′-methyl-O-äthyl-methylphosphinat gemäss Anspruch 12.

14. Hydrazino-N-benzyloxycarbonyl-N′-dichloracetyl-N′-methyl-O-isopropyl-methylphosphinat gemäss Anspruch 12.

15. Hydrazino-N-benzyloxycarbonyl-N′-dichloracetyl-N′-methyl-O-äthyl-äthylphosphinat gemäss Anspruch 12.

16. Acylierte Hydrazinomethyl-phosphinoxide gemäss Anspruch 1 der Formel I, worin $R_1$ und $R_2$ je einen $C_1$–$C_4$-Alkylrest bedeuten und die Reste $R_3$ bis $R_{10}$, $X_1$ und $X_2$ die in Anspruch 1 angegebenen Bedeutungen haben.

17. Acylierte Hydrazinomethyl-phosphonate, -phosphinate oder -phosphinoxide gemäss Anspruch 1 der Formel I, worin $R_1$ und $R_2$ unabhängig voneinander einen $C_1$–$C_4$-Alkyl- oder $C_1$–$C_4$-Alkoxyrest, $R_3$ einen Chloracetyl-, Dichloracetyl- oder 2,3,3-Trichloracrylsäurerest, $R_4$ Wasserstoff, dasselbe wie $R_3$, einen $C_1$–$C_4$-Alkyl-, $C_2$–$C_4$-Alkenyl-, Benzyl-, Phenäthyl-, $C_1$–$C_4$-Alkylcarbonyl-, $C_1$–$C_4$-Alkoxycarbonyl-, Benzoyl- oder Benzyloxycarbonylrest und $R_5$ Wasserstoff bedeuten.

18. Verfahren zur Herstellung von acylierten Hydrazinomethylphosphonsäuren, -phosphonaten, -phosphinsäuren, -phosphinaten und -phosphinoxiden der Formel I gemäss Anspruch 1, dadurch gekennzeichnet, dass man eine Verbindung der Formel II

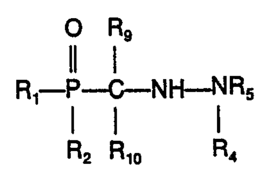 (II)

worin $R_1$, $R_2$, $R_4$, $R_5$, $R_9$ und $R_{10}$ die im Anspruch 1 angegebenen Bedeutungen haben, in einem inerten organischen Lösungsmittel, in Gegenwart der mindestens äquimolaren Menge eines säurebindenden Mittels mit einer Verbindung der Formel III umsetzt

$$R_3\text{–Hal} \qquad \text{(III)}$$

worin $R_3$ die im Anspruch 1 gegebene Bedeutung hat und Hal für Chlor oder Brom steht.

19. Verbindung der Formel II

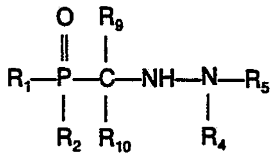 (II)

worin $R_1$, $R_2$, $R_4$, $R_5$, $R_9$ und $R_{10}$ die unter Anspruch 1 angegebenen Bedeutungen haben,
mit der Massgabe, dass die Substituenten $R_1$ und $R_2$ nicht für Hydroxy und $R_4$ und $R_5$ nicht für Wasserstoff stehen, wenn $R_{10}$ für Wasserstoff und $R_9$ für $C_1$–$C_4$-Alkyl oder gegebenenfalls substituiertes Phenyl steht.

20. Verbindung der Formel II gemäss Anspruch 19, worin $R_4$, $R_9$ und $R_{10}$ Wasserstoff bedeutet.

21. Verbindung der Formel II gemäss Anspruch 19, worin $R_4$, $R_5$, $R_9$ und $R_{10}$ Wasserstoff bedeuten.

22. Verfahren zur Herstellung einer Verbindung der Formel II

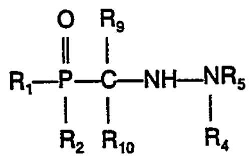 (II)

in der $R_4$ für einen Halogenalkanoylrest $-COX_1X_2-R_6$ oder einen durch 1 bis 3 Halogenatome substituierten Alkenoylrest mit 2 bis 4 Kohlenstoffatomen im Alkenylteil, einen Rest $-COOR_7$ oder $COR_8$ steht und die Reste $R_1$, $R_2$, $R_5$, $R_6$, $R_7$, $R_8$, $R_9$, $R_{10}$, $X_1$ und $X_2$ die unter Anspruch 1 gegebene Bedeutung haben, dadurch gekennzeichnet, dass man eine Verbindung der Formel IV

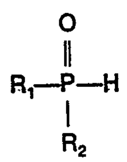 (IV)

mit einer Verbindung der Formel V

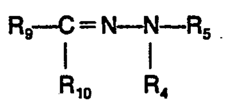 (V)

umsetzt, wobei die Reste $R_1$, $R_2$, $R_4$, $R_5$, $R_9$ und $R_{10}$ wie zuvor definiert sind.

23. Mittel zum Schützen von Kulturpflanzen vor der phytotoxischen Wirkung von Herbiziden, dadurch gekennzeichnet, dass es neben inertem Trägermaterial als antagonisierenden Wirkstoff eine Verbindung der Formel I gemäss Anspruch 1 enthält.

24. Mittel zum selektiven Bekämpfen von Unkräutern in Nutzpflanzenkulturen, dadurch gekennzeichnet, dass es neben inertem Trägermaterial sowohl das Herbizid als auch eine Verbindung der Formel I gemäss Anspruch 1 enthält.

25. Verfahren zum selektiven Bekämpfen von Unkräutern in Nutzpflanzenkulturen, dadurch gekennzeichnet, dass man die Kulturen oder deren Anbaufläche mit (a) einem Herbizid und (b) einer als Gegenmittel wirksamen Menge einer Verbindung der Formel I gemäss Anspruch 1 behandelt.

26. Verwendung einer Verbindung der Formel I gemäss Anspruch 1 zum Schützen von Kulturpflanzen gegen die schädigende Wirkung von Herbiziden.

27. Verwendung gemäss Anspruch 26 zum Schützen von Getreide-, Mais-, Reis- und Sorghum-Kulturen vor der Schädigung durch Halogenacetanilid-Herbizide.

28. Verfahren zum Schützen von Kulturpflanzen vor Schäden, die bei der Applikation von Herbiziden auftreten, dadurch gekennzeichnet, dass man
a) die Anbaufläche für die Pflanzen vor oder während der Applikation des Herbizids oder
b) den Samen oder die Stecklinge der Pflanzen oder die Pflanze selbst mit einer wirksamen Menge einer Verbindung der Formel I gemäss Anspruch 1 behandelt.

29. Für Nutzpflanzungen geeignetes Saatgut, welches mit einer wirksamen Menge einer Verbindung der Formel I gemäss Anspruch 1 behandelt worden ist.

**Claims**

1. Acylated hydrazinomethylphosphonic acids, hydrazinomethylphosphonates, hydrazinomethylphosphinic acids, hydrazinomethylphosphinates and hydrazinomethylphosphine oxides of formula I

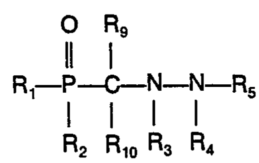 (I)

wherein

$R_1$ and $R_2$ are each independently hydroxy, $C_1$–$C_4$alkyl, aryl, $C_1$–$C_4$alkoxy, $C_2$–$C_4$alkenyloxy, $C_2$–$C_4$alkynyloxy, $C_2$–$C_4$haloalkoxy containing 1 to 5 halogen atoms, $C_2$–$C_8$alkoxyalkoxy, $C_1$–$C_4$cyanoalkoxy, or are $C_1$–$C_4$phenylalkoxy or aryloxy which is unsubstituted or substituted in the phenyl nucleus by halogen, cyano, nitro or $C_1$–$C_4$alkoxy,

$R_3$ is a haloalkanoyl radical $-COCX_1X_2-R_6$ or an alkenoyl radical which is substituted by 1 to 3 halogen atoms and contains 2 to 4 carbon atoms in the alkenyl moiety,

$R_4$ is hydrogen or a substituent as defined for $R_3$, or is a $-COOR_7$ or $-COR_8$ radical or a $C_1$–$C_4$alkyl or $C_2$–$C_4$alkenyl radical, or is a $C_1$–$C_4$phenylalkyl radical which is unsubstituted or substituted in the phenyl ring by halogen, cyano, nitro or $C_1$–$C_4$alkoxy,

$R_5$ is hydrogen or a $C_1$–$C_4$alkyl, $C_2$–$C_4$alkenyl or $C_2$–$C_4$alkynyl radical,

$R_6$ is hydrogen, halogen or a $C_1$–$C_6$alkyl radical,

$R_7$ is a $C_1$–$C_4$alkyl radical or a $C_1$–$C_4$phenylalkyl radical which is unsubstituted or substituted in the phenyl ring by halogen, cyano, nitro or $C_1$–$C_4$alkoxy,

$R_8$ is a $C_1$–$C_4$alkyl, $C_2$–$C_4$alkenyl or $C_2$–$C_4$alkynyl radical, or is a phenyl or $C_1$–$C_4$phenylalkyl radical which is unsubstituted or substituted by halogen, cyano, nitro or $C_1$–$C_4$alkoxy, and

$R_9$ is hydrogen, $C_1$–$C_4$alkyl, or phenyl which is unsubstituted or substituted by halogen, cyano, nitro or $C_1$–$C_4$alkoxy,

$R_{10}$ is hydrogen or $C_1$–$C_4$alkyl and

$X_1$ and $X_2$ are each halogen or one of the radicals $X_1$ and $X_2$ is also hydrogen.

2. Acylated hydrazinomethylphosphonic acids and hydrazinomethylphosphonates of formula I according to claim 1, wherein $R_1$ and $R_2$ are each independently hydroxy or $C_1$–$C_4$alkoxy and the radicals $R_3$ to $R_{10}$, $X_1$ and $X_2$ are as defined in claim 1.

3. Hydrazino-N-benzyloxycarbonyl-N′-chloroacetyl-N′-methyl-O,O-diethylphosphonate according to claim 2.

4. Hydrazino-N-benzyloxycarbonyl-N′-dichloroacetyl-N′-methyl-O,O-diethylphosphonate according to claim 2.

5. Hydrazino-N-benzyloxycarbonyl-N′-dichloroacetyl-N′-methyl-O,O-diisopropylphosphonate according to claim 2.

6. Hydrazino-N-methoxycarbonyl-N′-chloroacetyl-N′-methyl-O,O-diethylphosphonate according to claim 2.

7. Hydrazino-N-methoxycarbonyl-N′-dichloroacetyl-N′-methyl-O,O-diethylphosphonate according to claim 2.

8. Hydrazino-N-tert.-butoxycarbonyl-N′-chloroacetyl-N′-methyl-O,O-diethylphosphonate according to claim 2.

9. Hydrazino-N-tert.-butoxycarbonyl-N′-dichloroacetyl-N′-methyl-O,O-diethylphosphonate according to claim 2.

10. Hydrazino-N-ethoxycarbonyl-N′-dichloroacetyl-N′-methyl-O,O-diisopropylphosphonate according to claim 2.

11. Hydrazino-N′-chloroacetyl-N′-methyl-O,O-diethylphosphonate according to claim 2.

12. Acylated hydrazinomethylphosphinates of formula I according to claim 1, wherein $R_1$ is hydroxy or $C_1$–$C_4$alkoxy, $R_2$ is $C_1$–$C_4$alkyl and the radicals $R_3$ to $R_{10}$, $X_1$ and $X_2$ are as defined in claim 1.

13. Hydrazino-N-benzyloxycarbonyl-N′-dichloroacetyl-N′-methyl-O-ethyl-methylphosphinate according to claim 12.

14. Hydrazino-N-benzyloxycarbonyl-N′-dichloroacetyl-N′-methyl-O-isopropylmethylphosphinate according to claim 12.

15. Hydrazino-N-benzyloxycarbonyl-N′-dichloroacetyl-N′-methyl-O-ethyl-ethylphosphinate according to claim 12.

16. Acylated hydrazinomethylphosphine oxides of formula I according to claim 1, wherein $R_1$ and $R_2$ are each a $C_1$–$C_4$alkyl radical and the radicals $R_3$ to $R_{10}$, $X_1$ and $X_2$ are as defined in claim 1.

17. Acylated hydrazinomethylphosphonates, hydrazinomethylphosphinates or hydrazinomethylphosphine oxides of formula I according to claim 1, wherein $R_1$ and $R_2$ are each independently a $C_1$–$C_4$alkyl or $C_1$–$C_4$alkoxy radical, $R_3$ is a chloroacetyl, dichloroacetyl or 2,3,3-trichloroacrylic acid radical, $R_4$ is hydrogen or a substituent as defined for $R_3$, or is a $C_1$–$C_4$alkyl, $C_2$–$C_4$alkenyl, benzyl, phenethyl, $C_1$–$C_4$alkylcarbonyl, $C_1$–$C_4$alkoxycarbonyl, benzoyl or benzyloxycarbonyl radical and $R_5$ is hydrogen.

18. A process for the preparation of acylated hydrazinomethylphosphonic acids, hydrazinomethylphosphonates, hydrazinomethylphosphinic acids, hydrazinomethylphosphinates and hydrazinomethylphosphine oxides of formula I according to claim 1, which process comprises reacting a compound of formula II

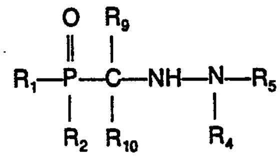 (II)

wherein $R_1$, $R_2$, $R_4$, $R_5$, $R_9$ and $R_{10}$ are as defined in claim 1, with a compound of formula III

$$R_3\text{–Hal} \qquad \text{(III)}$$

wherein $R_3$ is as defined in claim 1 and Hal is chlorine or bromine, in an inert organic solvent in the presence of at least an equimolar amount of an acid acceptor.

19. A compound of formula II

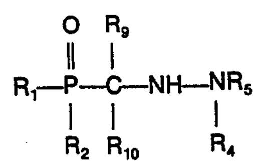 (II)

wherein $R_1$, $R_2$, $R_4$, $R_5$, $R_9$ and $R_{10}$ are as defined in claim 1, with the proviso that the substituents $R_1$ and $R_2$ are not hydroxy and $R_4$ and $R_5$ are not hydrogen when $R_{10}$ is hydrogen and $R_9$ is $C_1$–$C_4$alkyl or unsubstituted or substituted phenyl.

20. A compound of formula II according to claim 19, wherein $R_4$, $R_9$ and $R_{10}$ are hydrogen.

21. A compound of formula II according to claim 19, wherein $R_4$, $R_5$, $R_9$ and $R_{10}$ are hydrogen.

22. A process for the preparation of a compound of formula II,

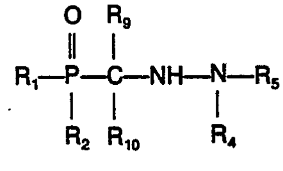 (II)

wherein $R_4$ is a haloalkanoyl radical $-COX_1X_2-R_6$ or an alkenoyl radical which is substituted by 1 to 3 halogen atoms and contains 2 to 4 carbon atoms in the alkenyl moiety, or is a $-COOR_7$ or $COR_8$ radical, and the radicals $R_1$, $R_2$, $R_5$, $R_6$, $R_7$, $R_8$, $R_9$

$R_{10}$, $X_1$ and $X_2$ are as defined in claim 1, which process comprises reacting a compound of formula IV

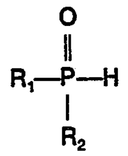

(IV)

with a compound of formula V

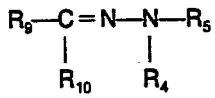

(V)

in which formulae $R_1$, $R_2$, $R_4$, $R_5$, $R_9$ and $R_{10}$ are as defined hereinbefore.

23. A composition for protecting cultivated plants from the phytotoxic action of herbicides, which composition contains a compound of formula I according to claim 1 as antagonist, together with an inert carrier.

24. A composition for selectively controlling weeds in crops of useful plants, which composition contains both the herbicide and a compound of formula I according to claim 1, together with an inert carrier.

25. A method of selectively controlling weeds in crops of useful plants, which method comprises treating the crops or the crop area (a) with a herbicide and (b) with an amount of a compound of formula I according to claim 1 that is effective as safener.

26. The use of a compound of formula I according to claim 1 for protecting cultivated plants from the harmful action of herbicides.

27. The use according to claim 26 for protecting cereals, maize, rice and sorghum crops from damage caused by haloacetanilide herbicides.

28. A method of protecting cultivated plants from damage caused by the application of herbicides, which method comprises

a) treating the crop area of the plants before or during application of the herbicide, or

b) treating the seeds or cuttings of the plants or the plants themselves with an effective amount of a compound of formula I according to claim 1.

29. Seeds suitable for growing useful plants, which seeds have been treated with an effective amount of a compound of formula I according to claim 1.

**Revendications**

1. Acides hydrazinométhylphosphoniques, hydrazinométhylphosphonates, acides hydrazinométhylphosphiniques, hydrazinométhylphosphinates et oxydes d'hydrazinométhylphosphines acylés répondant à la formule I

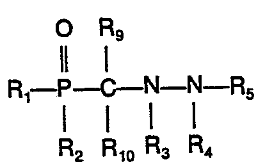

(I)

dans laquelle

$R_1$ et $R_2$ représentent chacun, indépendamment l'un de l'autre, un groupe hydroxy, alkyle en C 1–C 4, aryle, alcoxy en C 1–C 4, alcényloxy en C 2–C 4, alcynyloxy en C 2–C 4, halogénoalcoxy en C 2–C 4 contenant 1 à 5 atomes d'halogènes, alcoxyalcoxy en C 2–C 8, cyanalcoxy en C 1–C 4, phénylalcoxy en C 1–C 4, ou aryloxy non substitué ou substitué dans le noyau phényle par des halogènes, des groupes cyano, nitro ou alcoxy en C 1–C 4,

$R_3$ représente un groupe halogénoalcanoyle $-COCX_1X_2-R_6$ ou un groupe alcénoyle contenant 2 à 4 atomes de carbone dans la partie alcényle et substitué par 1 à 3 atomes d'halogènes,

$R_4$ représente l'hydrogène, il a les mêmes significations que $R_3$, il représente un groupe $-COOR_7$, $-COR_8$ ou un groupe alkyle en C 1–C 4, alcényle en C 2–C 4 ou phénylalkyle en C 1–C 4 éventuellement substitué dans le noyau phényle par des halogènes, des groupes cyano, nitro ou alcoxy en C 1–C 4,

$R_5$ représente l'hydrogène ou un groupe alkyle en C 1–C 4, alcényle en C 2–C 4 ou alcynyle en C 2–C 4,

$R_6$ représente l'hydrogène, un halogène ou un groupe alkyle en C 1–C 6,

$R_7$ représente un groupe alkyle en C 1–C 4 ou phénylalkyle en C 1–C 4 éventuellement substitué dans le noyau phényle par des halogènes, des groupes cyano, nitro ou alcoxy en C 1–C 4,

$R_8$ représente un groupe alkyle en C 1–C 4, alcényle en C 2–C 4, alcynyle en C 2–C 4, phényle ou phénylalkyle en C 1–C 4 éventuellement substitué par des halogènes, des groupes cyano, nitro ou alcoxy en C 1–C 4, et

$R_9$ représente l'hydrogène, un groupe alkyle en C 1–C 4 ou phényle éventuellement substitué par des halogènes, des groupes cyano, nitro ou alcoxy en C 1–C 4,

$R_{10}$ représente l'hydrogène ou un groupe alkyle en C 1–C 4, et

$X_1$ et $X_2$ représentent chacun un halogène, l'un de ces deux symboles pouvant également représenter l'hydrogène.

2. Acides hydrazinométhylphosphoniques et hydrazinométhylphosphonates acylés selon la revendication 1, répondant à la formule I dans laquelle $R_1$ et $R_2$ représentent chacun, indépendamment l'un de l'autre, un groupe hydroxy ou alcoxy en C 1–C 4 et les symboles $R_3$ à $R_{10}$, $X_1$ et $X_2$ ont les significations indiquées dans la revendication 1.

3. L'hydrazino-N-benzyloxycarbonyl-N'-chloracétyl-N'-méthylphosphonate d'O,O-diéthyle selon la revendication 2.

4. L'hydrazino-N-benzyloxycarbonyl-N'-dichloracétyl-N'-méthylphosphonate d'O,O-diéthyle selon la revendication 2.

5. L'hydrazino-N-benzyloxycarbonyl-N'-dichloracétyl-N'-méthylphosphonate d'O,O-diisopropyle selon la revendication 2.

6. L'hydrazino-N-méthoxycarbonyl-N'-chloracétyl-N'-méthylphosphonate d'O,O-diéthyle selon la revendication 2.

7. L'hydrazino-N-méthoxycarbonyl-N'-dichloracétyl-N'-méthylphosphonate d'O,O-diéthyle selon la revendication 2.

8. L'hydrazino-N-tert-butoxycarbonyl-N'-chloracétyl-N'-méthylphosphonate d'O,O-diéthyle selon la revendication 2.

9. L'hydrazino-N-tert-butyloxycarbonyl-N'-dichloracétyl-N'-méthylphosphonate d'O,O-diéthyle selon la revendication 2.

10. L'hydrazino-N-éthoxycarbonyl-N'-dichloracétyl-N'-méthylphosphonate d'O,O-diisopropyle selon la revendication 2.

11. L'hydrazino-N'-chloracétyl-N'-méthylphosphonate d'O,O-diéthyle selon la revendication 2.

12. Hydrazinométhylphosphinates acylés selon la revendication 1, répondant à la formule I dans laquelle $R_1$ représente un groupe hydroxy ou un groupe alcoxy en C 1–C 4, $R_2$ représente un groupe alkyle en C 1–C 4 et les symboles $R_3$ à $R_{10}$, $X_1$ et $X_2$ ont les significations indiquées dans la revendication 1.

13. L'hydrazino-N-benzyloxycarbonyl-N'-dichloracétyl-N'-méthyl-phosphinate d'O-éthyl-méthyle selon la revendication 12.

14. L'hydrazino-N-benzyloxycarbonyl-N'-dichloracétyl-N'-méthyl-phosphinate d'O-isopropyl-méthyle selon la revendication 12.

15. L'hydrazino-N-benzyloxycarbonyl-N'-dichloracétyl-N'-méthyl-phosphinate d'O-éthyl-éthyle selon la revendication 12.

16. Oxydes d'hydrazinométhylphosphines acylés selon la revendication 1, répondant à la formule I dans laquelle $R_1$ et $R_2$ représentent chacun un groupe alkyle en C 1–C 4 et les symboles $R_3$ à $R_{10}$, $X_1$ et $X_2$ ont les significations indiquées dans la revendication 1.

17. Hydrazinométhyl-phosphonates, -phosphinates ou oxydes d'hydrazinométhylphosphines acylés selon la revendication 1, répondant à la formule I dans laquelle $R_1$ et $R_2$ représentent chacun, indépendamment l'un de l'autre, un groupe alkyle en C 1–C 4 ou alcoxy en C 1–C 4, $R_3$ représente un groupe chloracétyle, dichloracétyle ou un radical d'acide 2,3,3-trichloracrylique, $R_4$ représente l'hydrogène, il a les mêmes significations que $R_3$, il représente un groupe alkyle en C 1–C 4, alcényle en C 2–C 4, benzyle, phénéthyle, (alkyle en C 1–C 4)-carbonyle, (alcoxy en C 1–C 4)-carbonyle, benzoyle ou benzyloxycarbonyle et $R_5$ représente l'hydrogène.

18. Procédé de préparation des acides hydrazinométhylphosphoniques, hydrazinométhylphosphonates, acides hydrazinométhylphosphiniques, hydrazinométhylphosphinates et oxydes d'hydrazinométhylphosphines acylés de formule I selon la revendication 1, caractérisé en ce que l'on fait réagir un composé de formule II

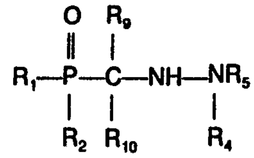 (II)

dans laquelle $R_1$, $R_2$, $R_4$, $R_5$, $R_9$ et $R_{10}$ ont les significations indiquées dans la revendication 1, dans un solvant organique inerte, en présence de la quantité au moins équimoléculaire d'un accepteur d'acide, avec un composé de formule III

$$R_3\text{–Hal} \quad \text{(III)}$$

dans laquelle $R_3$ a les significations indiquées dans la revendication 1 et Hal représente le chlore ou le brome.

19. Composé de formule II

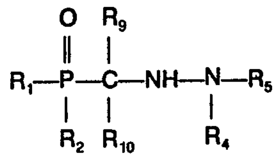 (II)

dans laquelle $R_1$, $R_2$, $R_4$, $R_5$, $R_9$ et $R_{10}$ ont les significations indiquées dans la revendication 1, sous réserve que les symboles $R_1$ et $R_2$ ne peuvent représenter des groupes hydroxy et les symboles $R_4$ et $R_5$ ne peuvent représenter l'hydrogène lorsque $R_{10}$ représente l'hydrogène et $R_9$ un groupe alkyle en C 1–C 4 ou un groupe phényle éventuellement substitué.

20. Composé de formule II selon la revendication 19, dans laquelle $R_4$, $R_9$ et $R_{10}$ représentent l'hydrogène.

21. Composé de formule II selon la revendication 19, dans laquelle $R_4$, $R_5$, $R_9$ et $R_{10}$ représentent l'hydrogène.

22. Procédé de préparation d'un composé de formule II

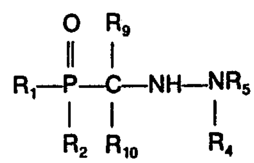 (II)

dans laquelle $R_4$ représente un groupe halogénoalcanoyle $-COX_1X_2-R_6$ ou un groupe alcénoyle contenant 2 à 4 atomes de carbone dans la partie alcényle et substitué par 1 à 3 atomes d'halogènes, un groupe $-COOR_7$ ou $COR_8$ et les symboles $R_1$, $R_2$, $R_5$, $R_6$, $R_7$, $R_8$, $R_9$, $R_{10}$, $X_1$ et $X_2$ ont les significations indiquées dans la revendication 1, caractérisé en ce que l'on fait réagir un composé de formule IV

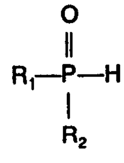 (IV)

avec un composé de formule V

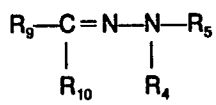 (V)

les symboles $R_1$, $R_2$, $R_4$, $R_5$, $R_9$ et $R_{10}$ ayant les significations indiquées ci-dessus.

23. Produit pour la protection des végétaux cultivés contre les effets phytotoxiques des herbicides, caractérisé en ce qu'il contient en tant que substance active antagonisante, avec un véhicule inerte, un composé de formule I selon la revendication 1.

24. Produit pour combattre sélectivement les mauvaises herbes dans les cultures de végétaux utiles, caractérisé en ce qu'il contient, avec un véhicule inerte, à la fois l'herbicide et un composé de formule I selon la revendication 1.

25. Procédé pour combattre sélectivement les mauvaises herbes dans les cultures de végétaux utiles, caractérisé en ce que l'on traite les cultures ou l'aire de culture par (a) un herbicide et (b) une quantité efficace en tant qu'antidote d'un composé de formule I selon la revendication 1.

26. Utilisation d'un composé de formule I selon la revendication 1 pour la protection des végétaux cultivés contre les effets nuisibles des herbicides.

27. Utilisation selon la revendication 26 pour la protection des cultures de céréales, de maïs, de riz et de sorgho contre les dommages provoqués par des herbicides du type halogénoacétanilide.

28. Procédé pour protéger les végétaux cultivés contre les dommages produits par l'application d'herbicides, caractérisé en ce que:

a) on traite l'aire de culture des végétaux avant ou durant l'application de l'herbicide, ou bien

b) on traite les semences ou les pousses des végétaux ou les végétaux eux-mêmes par une quantité efficace d'un composé de formule I selon la revendication 1.

29. Semences appropriées à des plantations de végétaux utiles, qui ont été traitées par une quantité efficace d'un composé de formule I selon la revendication 1.